# EUROPÄISCHE PATENTSCHRIFT

(11) **EP 4 306 098 B1**
(45) Veröffentlichungstag und Bekanntmachung des Hinweises auf die Patenterteilung: **18.11.2026**
(21) Anmeldenummer: 23214107.7
(22) Anmeldetag: 18.08.2021
(51) Int. Cl.: A61J 1/20

(54) **FILTERSYSTEM FÜR EIN GESCHLOSSENES FLUIDTRANSFERSYSTEM MIT DRUCKAUSGLEICH**
FILTER SYSTEM FOR A PRESSURE BALANCED CLOSED FLUID TRANSFER SYSTEM
SYSTÈME DE FILTRATION POUR UN SYSTÈME DE TRANSFERT DE FLUIDE FERMÉ AVEC ÉGALISATION DE PRESSION

(30) Priorität: 20.08.2020 DE 102020210629
(43) Veröffentlichungstag der Anmeldung: 17.01.2024
(62) Dokumentnummer(n) der früheren Anmeldung(en) nach Art. 76 EPÜ: 21766579.3 / 4 199 875
(73) Patentinhaber: B. Braun Melsungen AG, 34212 Melsungen (DE)
(72) Erfinder: BERG, Karl Martin, 34212 Melsungen (DE); SIKHILE, Varaprasad, 34212 Melsungen (DE); KOPP, Florin, 26419 Schortens (DE)
(74) Vertreter: Maiwald GmbH

(56) Entgegenhaltungen:
- WO-A2-2006/082529
- CN-U- 205 287 897
- US-A1- 2006 106 360
- US-A1- 2015 297 456
- US-A1- 2019 321 261
- US-B2- 9 693 843

## Beschreibung

Die Erfindung betrifft ein geschlossenes Fluidtransfersystem mit Druckausgleich.

Viele Substanzen, die als Injektionen oder in vergleichbarer Zuführungsform verabreicht werden, wie CMR-Arzneimittel, die beispielsweise in der Krebstherapie eingesetzt werden und bei ihrer therapeutischen Anwendung vor allem auf die Schädigung wachstumsintensiver Tumorzellen gerichtet sind, weisen außerhalb der eigentlichen Therapieanwendung ein erhebliches Gefährdungspotential auf. So sind solche Substanzen bedingt durch ihren Wirkmechanismus zum Teil selbst krebserzeugend, weshalb der Kontakt mit nicht in Therapie befindlichen Personen zu vermeiden ist. Für CMR-Arzneimittel werden daher bei der Herstellung applikationsfertiger Zubereitungen vermehrt geschlossene Medikamententransfersystem, sogenannte "Closed System Transfer Devices" oder auch CSTDs eingesetzt. Wichtiger Bestandteil solcher CSTDs sind Druckausgleichsmechanismen, die beim Zuspritzen und entnehmen von Flüssigkeiten in und aus einem Arzneimittelbehältnis, wie einem Vial, das Austreten toxischer Luftbestandteile verhindern.

Die Druckausgleichsmechanismen derzeitiger CSTDs beruhen entweder auf Systemen, bei denen toxische Luftbestandteile der ausströmenden Luft abgeschieden oder diese in einem Ausgleichsbehältnis aufgefangen werden. Im Rahmen der Abscheidung erfolgt der Druckausgleich beispielsweise über eine hydrophobe Filtermembran und einen weiteren, in Reihe geschalteten Filter aus Aktivkohlegewebe. Gegenüber Barrieresystemen, die auf einen Druckausgleich durch ein flexibles Volumen ohne Luftaustausch mit der äußeren Umgebung begrenzt sein können, benötigen solche Filtersysteme weniger Lagerraum, geringere Aufwendungen für die Entsorgung sowie weniger Schutzmaßnahmen für den Nutzer, beispielsweise hinsichtlich eines Beschädigungsrisikos, wie es bei Barrieresystemen besteht.

Nachteilig ist hierbei, dass die sichere Abscheidung toxischer Luftbestanteile zuverlässig gewährleistet werden muss.

Zur Prüfung einer ausreichenden Filterleistung können unter anderem TiCl₄-Tests (Titantetrachlorid-Tests, sogenannter "Smoke Test") durchgeführt werden. Durch den vergleichsweise hohen Druck von etwa 1.7 kPa kann festgestellt werden, ob TiCl₄-Rauch über den Filter in die äußere Umgebung entweicht. Derzeitige Filtersysteme zeigen häufig, dass das Entweichen von TiCl₄ während solcher Tests nicht zuverlässig verhindert werden kann.

In Anbetracht der vorstehenden Ausführungen ist es Aufgabe der vorliegenden Erfindung, ein Filtersystem für ein geschlossenes Fluidtransfersystem mit Druckausgleich bereitzustellen, dessen Filtereigenschaften verbessert sind, bei geringerem bzw. gleichbleibendem Bauraum. Desweiteren ist es Aufgabe der vorliegenden Erfindung, ein Entnahmespike für ein medizinisches Fluidtransfersystem mit einem Filtersystem bereitzustellen, dessen Filtereigenschaften verbessert sind, bei geringerem bzw. gleichbleibendem Bauraum.

US 2019/321261 A1, US 2006/106360 A1, US 2015/297456 A1, WO 2006/082529 A2, CN 205 287 897 U und US 9 693 843 B2 zeigen relevante Dokumente aus dem Stand der Technik.

Die erfindungsgemäße Aufgabe wird durch ein medizinischen Fluidtransfersystem nach Anspruch 1 gelöst. Weitere vorteilhafte Ausgestaltungen der Erfindung ergeben sich aus den Unteransprüchen.

Erfindungsgemäß weist ein Filtersystem für ein geschlossenes Fluidtransfersystem mit Druckausgleich einen Filter mit einer Hauptströmungsrichtung für ein den Filter durchlaufendes Fluid, die sich von einer Fluideingangsfläche zu einer Fluidausgangsfläche erstreckt, sowie ein Filtergehäuse auf, wobei der Filter in der Hauptströmungsrichtung eine größere oder zumindest gleiche Erstreckung aufweist als zumindest in einer Richtung quer dazu.

Mit anderen Worten verläuft die Hauptströmungsrichtung im Filter in einer Richtung, die quer bzw. transversal zu zumindest einer geringeren oder maximal gleich großen Filterausdehnung liegt. Nach Einrichten und Anordnen des Filters im Fluidtransfersystem kann der Fluidzulauf zu dem Filter (Fluideingangsfläche) und der Fluidablauf aus dem Filter (Fluidausgangsfläche) entsprechend so angeordnet werden, dass die Hauptströmungsrichtung im Filter entlang der längeren oder zumindest gleich langen Filtererstreckung im Vergleich zu zumindest einer Filtererstreckung quer dazu verläuft. Dementsprechend wird für die Durchströmung des Filters nicht die kürzeste Filtererstreckung gewählt.

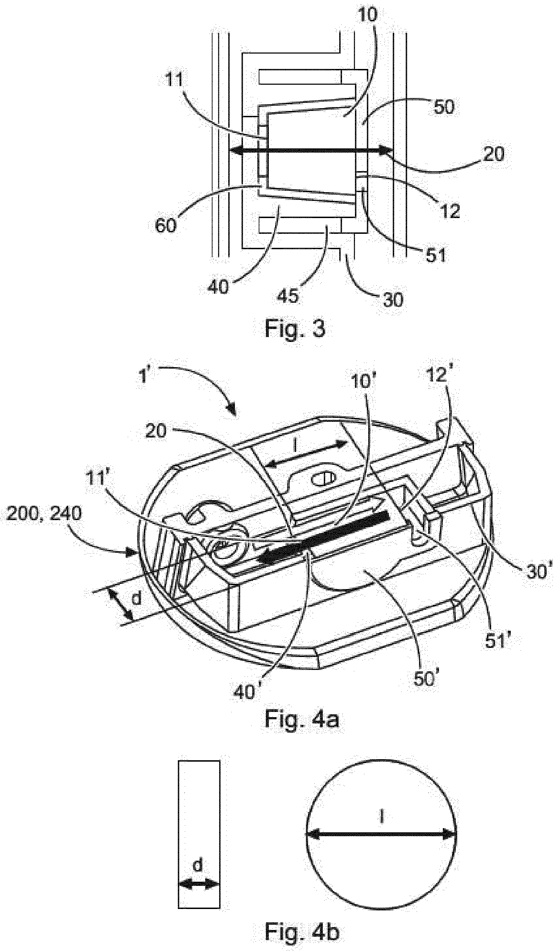

Der Filter ist demnach derart im Filtergehäuse angeordnet, dass das Durchströmen in Hauptströmungsrichtung gegenüber einer Durchströmung in zumindest einer Richtung quer dazu, verlängert oder zumindest gleich ist. Vorzugsweise ist der Filter so angeordnet, dass sich in der Hauptströmungsrichtung eine größere Erstreckung (I) und weiter bevorzugt eine signifikant größere Erstreckung (I) ergibt als in zumindest einer Richtung quer dazu (d) (bzgl. Bezeichnung "I" und "d" s. Fig. 4a und 4b). Die größere Erstreckung (I) ist insbesondere mindestens 1,1x größer, bevorzugt mindestens 1,5x größer, weiter bevorzugt mindestens 2x größer, noch weiter bevorzugt mindestens 3x größer als die Erstreckung (d) quer dazu. Bevorzugt ist die größere Erstreckung (I) auch nicht größer als 10x größer als die Erstreckung (d) quer dazu. Einerseits wird dadurch ein ausreichendes Filtervolumen erzielt, um gasförmige Elemente zu filtern. Andererseits wird aber das Filtervolumen auch nicht derart vergrößert, dass die Durchflussrate maßgeblich beeinflusst wird. Dies unterscheidet sich von bekannten Filtersystemen, die vielfach eine runde Filtermembran einsetzt, wobei diese derart angeordnet ist, dass die Hauptströmungsrichtung senkrecht zu den runden Filtermembranflächen ausgerichtet ist. Das den Filter durchlaufende Fluid nimmt in diesem Fall den kürzesten Weg durch den Filter. Dies führt dazu, dass über den kurzen Weg keine ausreichende Filterwirkung gewährleistet werden kann, um toxische Substanzen oder andere zu filternde Substanzen im Filter zurückzuhalten. Im Gegensatz dazu kann durch die erfindungsgemäße Verlängerung des Filterwegs eine Filterwirkung erhöht werden. Die Verlängerung des Filterwegs erfolgt dabei in Hauptströmungsrichtung zumindest gegenüber einer Filtererstreckung quer dazu.

Die Hauptströmungsrichtung des Filters definiert sich über die Anordnung des Filters im Filtersystem bzw. im Filtergehäuse des Filtersystems gemäß den dadurch definierten Ein- und Austrittsflächen für ein zu filterndes Fluid. Die Hauptströmungsrichtung wird durch den kürzesten Weg zwischen einer Fluideingangsfläche und einer Fluidausgangsfläche gebildet. Durch Anordnung einer Filtererstreckung, die zumindest in eine Richtung quer dazu nicht die kürzeste Erstreckung aufweist, wird somit der Filterweg nicht gegenüber einer anderen Anordnung verkürzt. Wie vorstehend beschrieben kann durch eine Filtererstreckung in Hauptdurchströmungsrichtung, die zumindest gegenüber einer Filtererstreckung quer dazu verlängert ist, der Filterweg gleichermaßen verlängert werden. Insbesondere kann durch eine Filterstreckung in Hauptströmungsrichtung, die länger als in den Richtungen quer dazu ist, der längste Filterweg gewählt werden. Demnach kann die Erfindung gegenüber dem bekannten Stand der Technik beispielsweise dadurch implementiert werden, dass das zu filternde Fluid im Filtergehäuse nicht der Filterfläche einer Filtermembran zugeführt und hierzu senkrecht durch diese - in einer Richtung parallel zu den Filterflächen durch eine dazwischen befindliche Seitenfläche - hindurchgeführt wird, sondern über eine zwischen den Filterflächen gebildete Seitenfläche zwischen den Filterflächen hindurch geleitet wird. Mit anderen Worten kann der Filter im Gehäuse beispielsweise in Bezug auf einen solchen Stand der Technik um 90° gedreht angeordnet sein oder die Fluidzu- und -ableitung von den Filterflächen auf die Seitenflächen umgeleitet werden. Alternativ oder ergänzend können aber auch die Filterabmessungen entsprechend angepasst werden.

Die vorliegende Erfindung stellt ferner ein Filtersystem zur Verfügung, welches für sich genommen die gestellte Aufgabe löst, bei begrenztem Bauraum in einem Filtergehäuse eine möglichst hohe Filtereffizienz zu bewerkstelligen.

Dieses Filtersystem ist in einem geschlossenen Fluidtransfersystem verbaut, das einen Filter und ein Filtergehäuse aufweist, wobei der Filter in Form eines Zylinders im Filtergehäuse integriert ist und als Hohlzylinder ausgebildet ist, mit mindestens einer Fluidöffnung zum Fluideintritt in den Hohlzylinder unter Bildung von Fluideingangsfläche(n) und mindestens einer Fluidöffnung zum Fluidaustritt aus dem Hohlzylinder unter Bildung von Fluidausgangsfläche(n), wobei die Fluideingangsfläche(n) und die Fluidausgangsfläche(n) so eingerichtet sind, dass die Hauptströmungsrichtung entweder nur radial von der Innenwandung des Hohlzylinders (Innenwandung des Hohlzylinders als Fluideingangsfläche(n)) nach außen (Außenwandung des Hohlzylinders als Fluidausgangsfläche(n)), oder nur axial entlang und parallel zur Längsachse (L) des Hohlzylinders, oder kombiniert sowohl radial als auch axial verläuft. Hier sind zumindest abschnittsweise die Fluideingangsfläche(n) (E) und/oder die Fluidausgangsfläche(n) (A) am Hohlzylinder ausgebildet. Die Fluidöffnung(en) zum Fluideintritt in den Hohlzylinder unter Bildung der Fluideingangsfläche(n) können dabei an einer Stirnseite und/oder an einem Ende der Seitenflächen des Hohlzylinders eingerichtet sein, und unabhängig davon oder in Übereinstimmung mit den Fluideingangsflächen(n) kann/können die Fluidöffnung(en) zum Fluidaustritt aus dem Hohlzylinder unter Bildung der Fluidausgangsfläche(n) an der gegenüberliegenden Stirnseite und/oder am anderen Ende der Seitenflächen des Hohlzylinders eingerichtet sein.

Diese technische Lösung kann für sich genommen eigenständig genutzt werden, sie kann jedoch vorteilhaft mit der oben beschriebenen Ausführung kombiniert werden, indem Fluidöffnung(en) zum Fluideintritt in den Hohlzylinder (Fluideingangsflächen E) und die Fluidöffnung(en) zum Fluidaustritt aus dem Hohlzylinder (Fluidausgangsflächen A) so eingerichtet sind, dass die Hauptströmungsrichtung im Filter entlang der längeren oder zumindest gleich langen Filtererstreckung im Vergleich zu zumindest einer Filtererstreckung quer dazu verläuft.

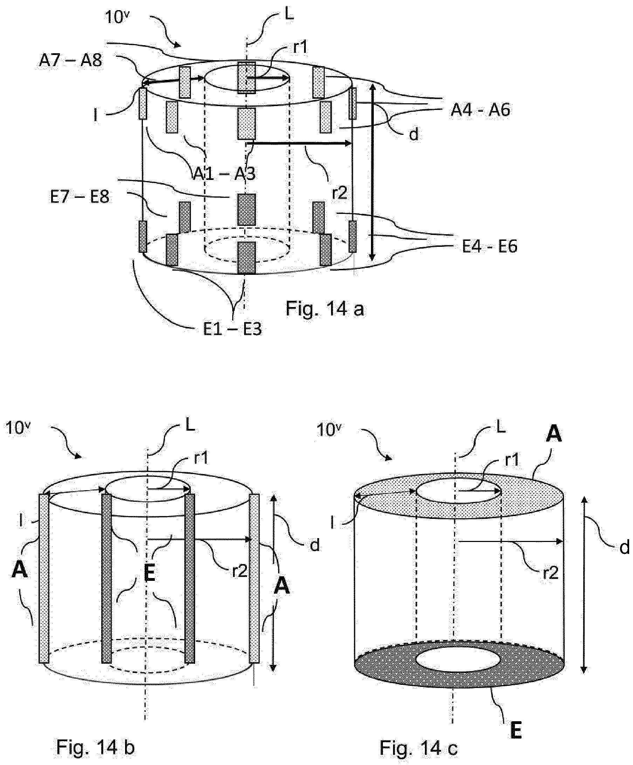

Bezogen auf die Bezeichnungen "I" und "d" in Fig. 14a bis 14c bedeutet dies, dass I zwar eine geringere Erstreckung haben kann als d, dass aber unabhängig davon die Erstreckung des Fluidstroms in der Hauptströmungsrichtung je nach Geometrie und den Maßen des Filter-Hohlzylinders und je nach Anordnung der Fluideingangsflächen E und der Fluidausgangsflächen A im Filtergehäuse variabel einstellbar ist.

Durch die erfindungsgemäßen technischen Lösungen wird eine signifikant bessere Filterwirkung erreicht als bei herkömmlichen Filtern für medizinische Einrichtungen und speziell bei einem Entnahmespike für ein medizinisches Fluidtransfersystem. Die Filterwirkung ist so gut, dass das erfindungsgemäße Filtersystem für ein geschlossenes Fluidtransfersystem mit Druckausgleich ohne weiteres den einleitend definierten, standardisierten Smoke Test besteht. Zudem wird erfindungsgemäß die verbesserte Filterwirkung bei gleichbleibendem Bauraum des Filterystems bzw. des Entnahmespikes für ein medizinisches Fluidtransfersystem erreicht.

Die so definierten Filtersysteme gemäß der Erfindung können vorteilhaft in einem medizinischen Fluidtransfersystem zum Transfer medizinischer Flüssigkeiten aus einem medizinischen Behältnis in ein anderes medizinischen Behältnis, insbesondere für eine Closed System Transfer Device und/oder zum Zweck des Druckausgleichs zwischen medizinischen Einrichtungen, integriert werden.

In einer Ausgestaltung kann der Filter über eine Filterabdeckung in einer Filteraufnahme des Filtergehäuses gehalten werden. Je nach Montagetiefe kann der Filter dann durch die Filterabdeckung unterschiedlich gestaucht werden.

Die Filteraufnahme kann zumindest einen der Filterabdeckung gegenüberliegenden Bereich aufweisen, der derart konfiguriert ist, dass der Filter zwischen der Filterabdeckung und der Filteraufnahme positionsfest gehalten wird. Insbesondere ist die Erstreckung des Filters zwischen den zur Anlage an der Filterabdeckung und der Filteraufnahme vorgesehenen Flächen zumindest abschnittsweise größer als der maximale Abstand zwischen der Filterabdeckung und der Filteraufnahme zum positionsfesten Halten des Filters zwischen der Filterabdeckung und der Filteraufnahme. Hierdurch kann der Filter zwischen der Filterabdeckung und der Filteraufnahme zumindest abschnittsweise komprimiert werden, so dass eine fluiddichte, insbesondere luftdichte Abdichtung gegenüber den Anlageflächen erfolgt.

Gemäß einer Weiterbildung kann die Filterabdeckung eine Öffnung aufweisen, durch die ein den Filter durchlaufendes Fluid an eine auf der dem Filter abgewandte Seite der Filterabdeckung befindliche Umgebung abgegeben werden kann.

Durch die Anordnung der Filterabdeckung und der Öffnung kann der Fluidaustritt derart konfiguriert werden, dass ein den Filter durchströmendes Fluid über die Fluideingangsfläche jeweils einen Mindestströmungsweg in Hauptströmungsrichtung zurücklegt. Wird beispielsweise eine runde Filtermembran in einem Filtersystem derart angeordnet, dass die Fluideingangsfläche und Fluidausgangsfläche von der zwischen den Filterflächen gebildeten Seitenfläche gebildet wird, kann die Öffnung der Filterabdeckung auf einer Seite der Fluidausgleichsfläche angeordnet werden. Die Öffnung kann aber auch auf einer Filterfläche angeordnet sein, die dann die Fluidausgangsfläche im Bereich der Öffnung bildet, wenn der von der Fluideingangsfläche auf der Seitenfläche und Fluidausgangsfläche auf der Filterfläche eine ausreichende Filterung gewährleisten kann. Die Öffnung kann aber auch zu zwei Raumrichtungen hin offen sein. Durch die Anordnung und Ausgestaltung kann hierüber die Hauptströmungsrichtung angepasst werden.

Insbesondere kann die Filterabdeckung zumindest abschnittsweise an einer zur Hauptströmungsrichtung des den Filter durchlaufenden Fluids im Wesentlichen senkrechten Fläche des Filters anliegen.

Der Filter kann dabei beispielsweise durch die Filterabdeckung quer zur Hauptströmungsrichtung gestaucht werden, um den Filter in der Filteraufnahme fluiddicht einpressen zu können. Die Anordnung des Filters zwischen der Filterabdeckung und der Filteraufnahme kann demnach derart erfolgen, dass die Anlageflächen des Filters an der Filterabdeckung und der Filteraufnahme zumindest abschnittsweise senkrecht zur Hauptströmungsrichtung liegen. Der Filter kann somit auch in Hauptströmungsrichtung komprimiert bzw. gestaucht werden.

Alternativ kann die Filterabdeckung zumindest abschnittsweise an einer zur Hauptströmungsrichtung des den Filter durchlaufenden Fluids im Wesentlichen parallelen Fläche des Filters anliegen. Alternativ oder ergänzend zur senkrechten Anordnung können auch Anlageflächen zumindest abschnittsweise parallel zur Hauptströmungsrichtung vorgesehen sein. Der Filter kann somit senkrecht und/oder in Hauptströmungsrichtung komprimiert bzw. gestaucht werden.

Hierdurch kann die Filterabdeckung beispielsweise, wie vorstehend bereits adressiert, durch entsprechende elastische Stauchung des Filterelements den Strömungsweg bedarfsweise in jeweiligen Richtungen verlängern oder verkürzen. Zudem kann aber durch eine anwendungsgerechte Anordnung der Filterabdeckung der Filter in der Filteraufnahme fluiddicht gehalten werden. Hierüber können dann auch Toleranzen quer zur Hauptströmungsrichtung ausgeglichen werden. Gleichermaßen kann, ebenfalls wie vorstehend adressiert, die Länge des Strömungspfads in Hauptströmungsrichtung gewährleistet bzw. beeinflusst werden.

In einer Ausgestaltung ist der Filter zumindest abschnittsweise in einer zur Hauptströmungsrichtung des den Filter durchlaufenden Fluids im Wesentlichen parallelen Richtung von einem elastisch verformbaren Trägerelement, insbesondere aus Silikon oder aus einem thermoplastischen Elastomer, umgeben.

Über das elastisch verformbare Trägerelement kann alternativ oder ergänzend zu einer elastischen Verformbarkeit des Filters eine fluiddichte Halterung des Filters in der Filteraufnahme erreicht werden. Bei dem elastisch verformbaren Trägerelement können somit zumindest abschnittsweise insbesondere kompressible Materialien verwendet werden. Eine elastische Verformbarkeit und Abdichtung kann exemplarisch aber auch über die Verwendung von Federgelenken ermöglicht werden. Die elastische Verformbarkeit kann somit durch Materialeigenschaften und/oder die geometrische Ausgestaltung des Trägerelements realisiert werden.

Gemäß einer Weiterbildung erstreckt sich das Trägerelement von einem der Filterabdeckung abgewandten Ende des Filters über eine Länge von 1 mm bis 15 mm, insbesondere 2 mm bis 8 mm.

Sofern der Filter beispielsweise nicht elastisch verformt wird oder elastisch verformbar ist, um fluiddicht in einer Filteraufnahme anzuliegen, kann über die Länge des Trägerelements zumindest ein Teil des Filters in Hauptströmungsrichtung fluiddicht gehalten werden. Über diese Länge ist es dem den Filter durchlaufenden Fluid auch nicht möglich, den Filter zu verlassen. Somit kann eine Mindestlänge des Strömungspfads des Fluids durch den Filter gewährleistet werden. Längen von kleiner 1 mm können dies nicht über ein weites Anwendungsspektrum sicherstellen. Die Sicherheit erhöht sich mit zunehmender Länge, so dass eine Länge von zumindest 2 mm bevorzugt sein kann. Andererseits können Längen über 15 mm aufgrund des Platzbedarfs oder auch der reduzierten Dynamik des Druckausgleichs nachteilig sein.

In einer Ausgestaltung weist der Filter in der Hauptströmungsrichtung des den Filter durchlaufenden Fluids eine Erstreckung von zumindest 2 mm, insbesondere mindestens 6 mm, bis höchstens 15 mm, insbesondere höchstens 10 mm, auf.

Ähnlich zur Mindestlänge des vorstehenden Trägerelements sollte auch der Filter in Hauptströmungsrichtung eine ausreichende Länge des Strömungspfads bereitstellen. Ebenfalls vergleichbar maximale Erstreckung in Hauptströmungsrichtung an die räumlichen Verhältnisse und die erforderliche Druckausgleichsdynamik anzupassen. In diesem Sinne bietet eine weitere Verlängerung des Filters und/oder des vergleichbar einsetzbaren Trägerelements in Hauptströmungsrichtung keine bedarfswesentliche Verbesserung mehr.

Alternativ oder ergänzend kann der Filter ein Volumen von zumindest 60 mm³, bevorzugt mindestens 70 mm³, insbesondere mindestens 80 mm³, und höchstens 400 mm³, bevorzugt höchstens 260 mm³, insbesondere höchstens 200 mm³, aufweisen.

Über das Volumen kann die Filterwirkung bei reduzierter Länge in Hauptströmungsrichtung bei entsprechender Durchströmungsfläche senkrecht zur Hauptströmungsrichtung korrespondierend zu einer größeren Länge mit kleinerer Durchströmungsfläche gehalten werden. Das Filtervolumen bezieht sich somit auf ein für die Filterung wirksames Volumen.

Gemäß einer Weiterbildung ist das Filtersystem unlösbar mit dem geschlossenen Fluidtransfersystem verbindbar.

Somit kann bei sachgerechter Handhabung sichergestellt werden, dass keine Substanzen nach Außen entweichen, die nicht den Filter des Filtersystems oder eines anderen vergleichbaren Filtersystems durchlaufen haben.

In einer vorteilhaften Aufführung kann der Filter von der vorstehenden Filteraufnahme, der vorstehenden Filterabdeckung und/oder dem vorstehenden Trägerelement in einer radialen Richtung in Bezug auf die Hauptströmungsrichtung des den Filter durchlaufenden Fluids rotationssymmetrisch umgeben werden.

Durch die rotationssymmetrische Aufnahme des Filters kann eine gleichmäßige Flächenpressung in Umfangsrichtung erreicht werden, so dass jeder über die Fluideingangsfläche den Filter durchlaufende Strömungspfad in Hauptströmungsrichtung im Wesentlichen gleichen über die Flächenpressung beeinflussbaren Bedingungen unterliegt.

Zudem können dadurch hierüber auch zumindest abschnittsweise annähernd gleiche Strömungspfade für das Fluid in Hauptströmungsrichtung ausbildbar sein. Mit anderen Worten ist nicht ein einzelner Strömungspfad wesentlich kürzer als die übrigen Strömungspfade bzw. es ergibt sich zumindest eine Mindestlänge aller Strömungspfade.

Gemäß einer Weiterbildung ist der Filter derart ausgebildet, dass ein jeweiliger Strömungspfad eines den Filter durchlaufenden Fluids länger als die Erstreckung des Filters in der Hauptströmungsrichtung des den Filter durchlaufenden Fluids ist.

Demnach wird das Fluid während des Durchlaufs des Filters umgelenkt, d.h. der Strömungspfad wird gegenüber einem direkten Durchlauf verlängert. Bei einem Aktivkohlefilter kann der Strömungspfad dabei derart konfiguriert werden, dass das zu filternde Fluid einen ausreichenden Flächenkontakt mit dem Kohlenstoff während eines Filterdurchlaufs erfährt. Der Kohlenstoff kann in Form eines Granulats, Gewebes und als Gemisch mit Kunststoffmaterialien oder dergleichen im Filter enthalten sein.

Insbesondere kann wobei der Filter zumindest zwei sich im Wesentlichen senkrecht zur Hauptströmungsrichtung erstreckende Filterschichten aufweist.

Die Verlängerung der Strömungspfades kann dabei dadurch unterstützt werden, dass sich das Fluid nach Durchlaufen einer Filterschicht und vor Durchlaufen der nächsten Filterschicht in dem zwischen den Filterschichten gebildeten Raum verteilen kann. Auch wenn die Filterschichten direkt aufeinanderliegen, kann ein vergleichbarer Effekt erzielt werden.

In einer Ausgestaltung weist der Filter oder zumindest eine der Filterschichten, insbesondere alle Filterschichten, Umlenkmittel, insbesondere eine sich im Wesentlichen senkrecht zur Hauptströmungsrichtung erstreckende Gewebestruktur und/oder Granulate, auf.

Über die Umlenkmittel kann die Verlängerung des Strömungspfads gezielt beeinflusst werden. Zum Beispiel kann über die Breite der Gewebefasern eine zur Hauptströmungsrichtung transversale Strömungspfadkomponente in ihrer Länge eingestellt werden. In ähnlicher Weise könne unterschiedliche Granulatgrößen eingesetzt werden.

Gemäß einer Weiterbildung weisen zumindest zwei aufeinanderfolgende Filterschichten eine Gewebestruktur auf, die jeweils zueinander versetzt sind.

Durch den Versatz wird die Wahrscheinlichkeit erhöht, dass durch die Gewebestrukturen gebildete Durchgänge in Hauptströmungsrichtung nicht direkt übereinanderliegen, so dass immer wieder laterale Umlenkungen erfolgen. Mit anderen Worten wird dadurch nach Möglichkeit vermieden, dass ein Fluid ohne Umlenkung die aufeinanderfolgenden Filterschichten passiert.

In einer Ausgestaltung bildet der Filter einen zylindrischer Vollkörper aus.

Die Ausbildung des Filters als zylindrischer Vollkörper kann durch die Formgebung des Filters an sich vorgegeben sein. Alternativ oder ergänzend kann auch die Anordnung des Filters im Filtersystem die zylindrische Ausgestaltung bedingen. Mit anderen Worten kann der Filter bei entsprechender Elastizität und beispielsweise größerem Volumen als die Filteraufnahme zumindest abschnittsweise in eine zylindrische Form gepresst werden. Sofern der Filter verformt wird, kann eine gleichmäßige Verformung auch eine gleichmäßige Filterwirkung bzw. Filterstreckenführung ausbilden. Die Verformung kann aber auch ungleichmäßig vorgesehen werden, um gezielt lokal unterschiedliche Filterwirkungen und/oder Filterstreckenführungen einstellen oder auch anpassen zu können.

Die Stirnflächen des Zylinders können in einer Variante die Fluideingangsfläche und die Fluidausgangsfläche bilden. Die Hauptströmungsrichtung verläuft demnach von einer Stirnfläche des zylindrischen Vollkörpers zur jeweils anderen Stirnfläche. Die Länge des Zylinders entlang seiner Längsachse ist in diesem Fall gleich dem, insbesondere größer als der Durchmesser des Zylinders.

In einer alternativen Variante können die Fluideingangsfläche und die Fluidausgangsfläche durch die Außenwandung radial zur Längsachse gebildet werden. Die Hauptströmungsrichtung verläuft demnach im Wesentlichen radial zur Längsachse. Die Länge des Zylinders entlang seiner Längsachse ist in diesem Fall gleich dem, insbesondere kleiner als der Durchmesser des Zylinders bzw. eines Filterwegs in der Hauptströmungsrichtung.

Der Begriff des Vollkörpers bezieht sich hier nicht auf einen dichten Körper, sondern auf eine Formgebung ohne geometrische Unterbrechungen. Mit anderen Worten weist der Vollkörper weiterhin eine zur Filterung erforderliche Durchlässigkeit bzw. Porosität auf, aber ist kein Hohlkörper, wie dieser im Folgenden noch beschrieben wird.

Alternativ ist der Filter als Hohlkörper ausgebildet, der zumindest eine Öffnung in den Hohlkörper aufweist.

Durch die Öffnung kann ein zu filterndes Fluid in den Hohlkörper eindringen und sich im Hohlvolumenverteilen. Laut Erfindung bildet dabei die Innenwandung des Hohlkörpers zumindest abschnittsweise die Fluideingangsfläche für das zu filternde Fluid. Die Fluidausgangsfläche wird durch zumindest einen Abschnitt der Außenwandung gebildet. Umgekehrt kann der Filter aber auch ein Fluid, das in umgekehrter Richtung strömt filtern. Für dieses Fluid wird dann zumindest ein Abschnitt der Außenwandung zur Fluideingangsfläche und die Innenwandung bildet zumindest abschnittsweise die Fluidausgangsfläche aus. Die umgekehrte Strömungsrichtung betrifft allgemein auch andere Filterausgestaltungen, bei denen eine bidirektionale Filterung erfolgen kann.

Insbesondere ist der Filter als Hohlzylinder ausgebildet. Bevorzugt bildet dabei eine Innenwandung des Hohlzylinders parallel zur Längsachse des Hohlzylinders zumindest abschnittsweise die Fluideingangsfläche und/oder die Fluidausgangsfläche aus.

Der Hohlzylinder wird demnach zumindest anfänglich in radialer Richtung durchströmt. Sofern die Außenwandung des Hohlzylinders parallel zur Längsachse des Hohlzylinders zumindest abschnittsweise je nach Strömungsrichtung die Fluidausgangsfläche bzw. Fluideingangsfläche bildet und die Fluideingangsfläche bzw. Fluidausgangsfläche der Innenwandung in radialer Richtung einander gegenüberliegen verläuft die Hauptströmungsrichtung radial zur Längsachse des Hohlzylinders. Durch Versatz der jeweiligen Fluideingangsfläche und Fluidausgangsfläche in Richtung der Längsachse kann die Hauptströmungsrichtung zumindest abschnittsweise axiale Anteile in radialer Richtung aufweisen, also von einer rein radialen Richtung abgelenkt verlaufen. Alternativ oder ergänzend kann die Fluidausgangsfläche bzw. Fluideingangsfläche zum Zusammenwirken mit der Fluideingangsfläche bzw. Fluidausgangsfläche der Innenwandung des Hohlzylinders zumindest abschnittsweise durch zumindest eine der Stirnseite des Hohlzylinders gebildet werden. Die Hauptströmungsrichtung wird in diesem Fall ebenfalls von einer rein radialen Verlaufsrichtung abgelenkt. Wenn durch die vorgenannten Varianten die Hauptströmungsrichtung nicht radial zur Längsachse des Hohlzylinders verläuft, kann die Filterstrecke weiter verlängert werden.

In einer Ausgestaltung ist der Filter hydrophob, insbesondere ein Aktivkohlefilter.

Die Filterwirkung wird somit auf die zu filternden Substanzen gerichtet und nicht durch eine Feuchtigkeitsaufnahme reduziert. Als hydrophober Filter kann beispielsweise ein Aktivkohlefilter eingesetzt werden, wie beispielsweise aus einem Gewebe aus Aktivkohlefasern oder aus einem gesinterten Material aus Aktivkohlepartikeln.

Gemäß einem Aspekt ist die vorliegende Erfindung auf ein Filtersystem gerichtet, wobei der Filter in einem nach außen abgedichteten Gehäuse eingerichtet ist, wobei in einem Rauchtest beim Einleiten von rauchbildendem TiCl₄ kein Rauch nach außen freigesetzt wird.

Gemäß einem weiteren Aspekt ist die vorliegende Erfindung auf ein Filtersystem gerichtet, wobei über den Filter bis zumindest 200ml an rauchbildendem TiCl₄ absorbierbar ist.

In einem weiteren Gegenstand bezieht sich die vorliegende Erfindung auf ein medizinisches Fluidtransfersystem zum Transfer medizinischer Flüssigkeiten aus einem medizinischen Behältnis in eine anderes medizinischen Behältnis, insbesondere für eine Closed System Transfer Device und/oder zum Zweck des Druckausgleichs zwischen medizinischen Behältnissen oder Einrichtungen. Das bzw. die eine und/oder das bzw. die andere medizinische Behältnis bzw. Einrichtung kann jeweils ausgewählt sein aus Vials, Gefäßen, medizinischen Spritzen, medizinischen Schläuchen. Die vorliegende Erfindung bezieht sich insbesondere auf ein medizinisches Fluidtransfersystem, welches als Entnahmespike ausgeführt ist, zum Entnehmen medizinischer Flüssigkeiten aus Behältern.

Der Entnahmespike weist zweckmäßig einen mit einem Einstechdorn verbundenen Griffteil auf. Der Entnahmespike umfasst typischerweise im Einstechdorn einen Belüftungskanal sowie einen Flüssigkeitskanal, wobei der jeweilige Kanal in einen entsprechenden Filter mündet - der Belüftungskanal in einen Luftfilter und der Flüssigkeitskanal in einen Flüssigkeitsfilter. In einer bevorzugten Ausführungsform sind der Luftfilter und der Flüssigkeitsfilter im Gehäuse des Entnahmespikes in jeweils entsprechenden ersten und zweiten Filterkammern eingerichtet. Der Entnahmespike zum Entnehmen medizinischer Flüssigkeiten aus Behältern kann grundsätzlich wie in der EP 1 192 927 A beschrieben und gezeigt ausgeführt werden.

In einer Ausgestaltung weist der Entnahmespike zumindest das zuvor beschriebene Filtersystem auf, wobei das Filtersystem mit dem Belüftungskanal strömungsverbunden ist. Der Filter des Filtersystems wird zumindest als Luftfilter eingesetzt.

Bevorzugt weist der Entnahmespike einen zusätzlichen Luftfilter und/oder Flüssigkeitsfilter auf, der oder die ebenfalls mit dem Belüftungskanal strömungsverbunden ist bzw. sind. Der Entnahmespike kann alternativ oder ergänzend für den Flüssigkeitskanal auch einen weiteren oder denselben Flüssigkeitsfilter aufweisen.

In Bezug auf den Belüftungskanal ist bzw. sind der zusätzliche Luftfilter und/oder der Flüssigkeitsfilter zwischen dem Belüftungskanal und dem Filter angeordnet.

Insbesondere wird bzw. werden der zusätzliche Luftfilter und/oder der Flüssigkeitsfilter durch den Filter positionsfest im Entnahmespike gehalten.

In einer bespielhaften Ausgestaltung wird die Luft an einer dem Einstechdorn abgewandten Seite aus dem Belüftungskanal ausgeleitet. Die ausströmende Luft wird dann zunächst durch den zusätzlichen Luftfilter geleitet. Der zusätzliche Filter ist zum Beispiel als hydrophober Filter ausgebildet, der primär im Belüftungskanal mitgeführte Flüssigkeiten, Partikel, Mikroorganismen und/oder Aerosole zurückhält. Eine derartige Filterung kann schon über einen vergleichsweise kurzen Filterweg ausreichend sichergestellt werden. Daher kann der zusätzliche Luftfilter als übliche Filtermembran ausgebildet sein, bei der die Hauptdurchströmungsrichtung im Wesentlichen senkrecht zu den flächigen Filterflächen verläuft. Mit anderen Worten kann es hier ausreichend sein, dass die kürzeste Filtererstreckung zur Durchströmung genutzt wird. Die derart gefilterte Luft aus dem Belüftungskanal wird dann durch den Filter des Filtersystems geleitet. Der Filter dient dabei zumindest ebenfalls als Luftfilter, wobei dieser insbesondere auf die Filterung toxischer Gase gerichtet ist. Insbesondere zur ausreichenden Sicherstellung der Zurückhaltung toxischer Gase wird hier der erfindungsgemäße Filter zur Verlängerung der Filterstrecke und somit effektiveren Filterwirkung eingesetzt.

In einer Weiterbildung ist der Filter als Hohlzylinder ausgebildet und radial um die Längsachse des Belüftungskanals oder um die Austrittsfläche aus dem zusätzlichen Luftfilter angeordnet. Die demnach als Fluideingangsfläche fungierende Innenwandung des Filters ist somit insbesondere umlaufend nutzbar, so dass sich die zu filternde Luft auf die vergleichsweise große Fluideingangsfläche verteilen kann. Die Durchströmung des Filters kann infolge nicht nur über eine längere Strecke, sondern auch mit erhöhten Durchflussraten und/oder einem geringeren zu filternden Luftvolumen pro Filtervolumen vorgenommen werden.

Erfindungsgemäß weisen das medizinische Fluidtransfersystem im Allgemeinen und der Entnahmespike im Besonderen ferner - ggf. zusätzlich zu weiteren herkömmlichen Filtern - einen Filter auf (in den nachfolgend beschriebenen beispielhaften Ausführungsformen als Filter 10, 10' bzw. 10" bezeichnet), der so eingerichtet ist, dass die Hauptströmungsrichtung eines Fluids im Filter (10, 10' bzw.10") eine größere oder zumindest gleiche Erstreckung (I) aufweist als zumindest in eine Richtung quer dazu (d). Zur näheren Beschreibung dieses speziell eingerichteten Filters wird auf die obige Beschreibung Bezug genommen, wobei der so beschrieben erfindungsgemäße Filter typischerweise in Druckausgleichs- bzw. Belüftungs- oder Entlüftungskanälen von medizinischen Fluidtransfersystemen eingerichtet ist. Bei dem Entnahmespike kommuniziert der erfindungsgemäße Filter entsprechend mit dem Belüftungskanal. Dadurch wird sichergestellt, dass etwaige toxische Substanzen von CMR-Arzneimitteln in entsprechenden Druckausgleichs- bzw. Belüftungs- oder Entlüftungskanälen wirksam zurückgehalten werden.

Der Entnahmespike kann insbesondere ein Mini-Spike sein, der gegenüber anderen Ausführungsformen verkleinert ist. Durch die erfindungsgemäße Durchströmung des Filters in einer Hauptströmungsrichtung entlang der längsten Filtererstreckung kann beispielsweise durch Änderung der Strömungszuführung und Filteraufnahme eine verbesserte Filterung bei gleichem Bauraum erzielt werden, bzw. eine gleichwirksamer Filterung wird bei einer geringeren Baugröße bzw. einem kleineren Lageplatz erreicht. Mit anderen Worten kann eine Miniaturisierung durch die Strömungspfade und/oder Anordnung des Filters zur erfindungsgemäßen Durchströmung unterstützt werden.

Im Folgenden wird die Erfindung unter Hinzuziehung der beigefügten Figuren näher erläutert. Die Figuren zeigen im Einzelnen:
Fig. 1 eine Seitenansicht eines Ausschnitts eines geschlossenen Fluidtransfersystems mit einem an einer Filtersystemaufnahmen befestigten Filtersystem;
Fig. 2 eine Querschnittsansicht des exemplarischen Filtersystems gemäß der in Figur 1 über die Pfeile A-A angezeigten Schnittlinie;
Fig. 3 einen vergrößerten Ausschnitt um den Bereichs der Filteraufnahme des Filtersystems nach Figur 2;
Fig. 4a eine perspektivische Ansicht einer weiteren exemplarischen Ausführungsform eines Filtersystems;
Fig. 4b eine schematische Darstellung des in Figur 4a dargestellten Filters in einer Seitenansicht und einer Draufsicht;
Fig. 5 eine perspektivische Ansicht eines exemplarischen Entnahmespikes zur Verwendung mit einem erfindungsgemäßen Filtersystem;
Fig. 6 eine perspektivische Explosionsdarstellung des Entnahmespikes gemäß Figur 5;
Fig. 7 eine perspektivische Schnittansicht des Entnahmespikes gemäß Figur 5;
Fig. 8a eine schematische Darstellung der Durchströmung eines Filters gemäß dem Stand der Technik;
Fig. 8b eine schematische Darstellung der Durchströmung eines Filters gemäß einer exemplarischen erfindungsgemäßen Ausgestaltung;
Fig. 9 eine schematische Darstellung der Durchströmung eines Filters gemäß einer weiteren exemplarischen erfindungsgemäßen Ausgestaltung unter Verwendung von über Gewebestrukturen ausgebildeten Filterschichten;
Fig. 10 eine schematische Darstellung eines vergrößerten Ausschnitts einer Filterschicht gemäß Fig. 9 in Blickrichtung der Hauptströmungsrichtung;
Fig. 11a eine perspektivische Ansicht einer weiteren exemplarischen Ausführungsform eines Filters als zylindrischer Hohlkörper;
Fig. 11b eine schematische Darstellung des in Figur 11a dargestellten Filters in einer Draufsicht;
Fig. 12 eine perspektivische Ansicht einer exemplarische Ausführungsform eines Entnahmespikes zur Verwendung mit einem erfindungsgemäßen Filtersystem;
Fig. 13 eine perspektivische Schnittansicht des Entnahmespikes gemäß Figur 12; und
Fig. 14a bis 14c perspektivische Ansichten einer weiteren exemplarischen Ausführungsform eines Filters als zylindrischer Hohlkörper.

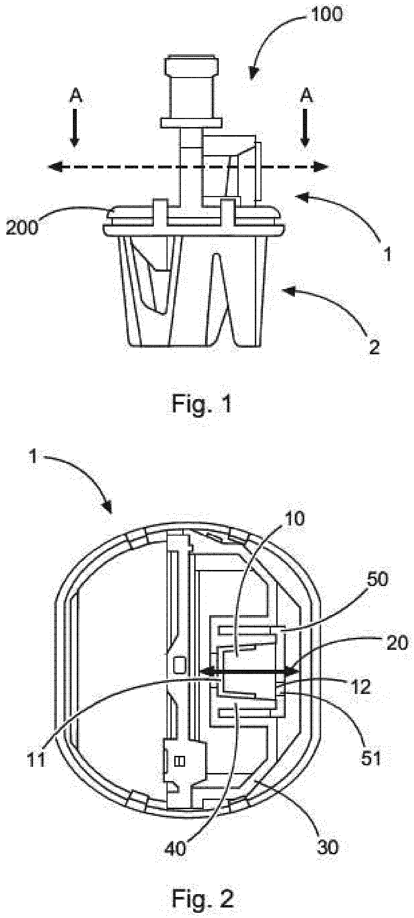

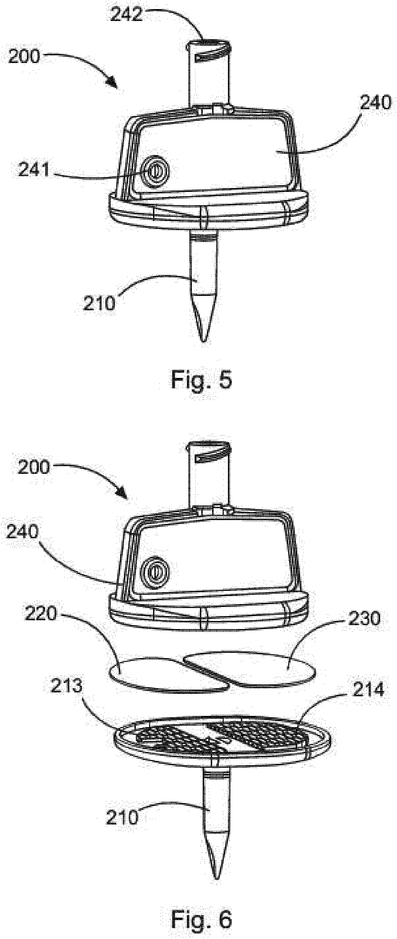

Figur 1 zeigt einen Ausschnitt eines geschlossenen Fluidtransfersystems 100 mit einem Filtersystem 1, das an einer Filtersystemaufnahme 2 befestigt ist. Die Filtersystemaufnahme 2 kann beispielsweise ein sogenannter "Spike-Adapter" sein, der auf ein Arzneimittelbehältnis aufsetzbar ist und über den innenliegenden Einstechdorn 210 eines Entnahmespikes 200 (Figuren 5 bis 7) Flüssigkeit aus dem Arzneimittelbehältnis leiten kann. Das Filtersystem 1 dient bei einem entsprechenden Flüssigkeitsaustausch dem erforderlichen Druckausgleich. Zudem kann das Filtersystem 1 auch einen Weiterleitungsabschnitt für die aus dem Arzneimittelbehältnis entnommene Flüssigkeit umfassen. Das Filtersystem 1 wird auf die Filtersystemaufnahme 2 aufgeschweißt, beispielsweise über ein Ultraschall-Schweißverfahren, kann aber auch alternativ oder ergänzend zur weiteren Sicherung über Rasthaken auf der Filtersystemaufnahme 2 gehalten werden.

Gemäß der in Figur 1 dargestellten Schnittlinie A-A zeigt Figur 2 eine Querschnittsansicht des entsprechenden exemplarischen Filtersystems 1 gemäß Figur 1. Das Filtersystem 1 weist ein Filtergehäuse 30 mit einer darin ausgebildeten Filteraufnahme 40 auf. Ein Filter 10 wird in der Filteraufnahme 40 über eine Filterabdeckung 50 gehalten. Der Filter 10 weist dabei eine Fluideingangsfläche 11 und eine Fluidausgangsfläche 12 auf, wobei die Hauptströmungsrichtung 20 von der Fluideingangsfläche 11 zur Fluidausgangsfläche 12 verläuft. Die Fluideingangsfläche 11 wird auf einer zu einem Fluidkanal hin offenen Seite des Filters 10 gebildet. Die Fluidausgangsfläche 12 wird als die Fläche definiert, die dem Fluidaustausch mit der äußeren Umgebung dient, also - direkt oder indirekt - vom Filter 10 aus gesehen, mit der äußeren Umgebung in fluider Verbindung steht. In der dargestellten Ausführungsform entspricht die Fluidausgangsfläche 12 einer in der Filterabdeckung 50 vorgesehenen Öffnung 51.

Wie aus Figur 2 ersichtlich ist, ist die Erstreckung des Filters 10 in der Hauptströmungsrichtung 20 des den Filter 10 durchlaufenden Fluids größer als quer dazu. Der Filter 10 ist demnach derart angeordnet, dass der Strömungspfad maximal wird. Dadurch wird sichergestellt, dass die Hauptströmungsrichtung in einer Richtung (dargestellt mit Doppelpfeil beim Bezugszeichen 20) verläuft, die quer zur geringeren Filterausdehnung liegt. Demnach kann die Filterwirkung bei gleichem Platzbedarf durch die Anordnung der Fluideingangsfläche 11 und Fluidausgangsfläche 12 optimiert werden.

Figur 3 zeigt den Bereich um die Filteraufnahme 40 des Filtersystems nach Figur 1 nochmals vergrößert. Aus der vergrößerten Darstellung wird deutlich, dass der Filter 10 hier über ein Trägerelement 60 in der Filteraufnahme 40 gehalten wird. Das Trägerelement 60 ist exemplarisch aus Silikon ausgebildet und kann somit über seine Kompressibilität den Bereich zwischen dem Filter 10 und der Filteraufnahme 40 in einer radialen Richtung zur Hauptströmungsrichtung 20 fluiddicht abdichten. Über die eingezeichnete Länge x des Trägerelements 60 in der Hauptströmungsrichtung 20 kann darüber hinaus gewährleistet werden, dass jedes des Filter 10 von der Fluideingangsfläche 11 aus durchströmende Fluid zumindest über diese Länge in der Hauptströmungsrichtung 20 im Filter 10 geführt wird.

Zudem zeigt die Vergrößerung auch nochmals die Filterabdeckung 50. Diese ist auf einer Fluidausgangsfläche 12 zuzuordnenden Seite des Filters 10 angeordnet. Die Filterabdeckung 50 wird zum Halten des Filters 10 in der Filteraufnahme 40 selbst in einer Filterabdeckungsaufnahme 45 gehalten. Hierzu kann die Filterabdeckung 50 beispielsweise in die Filterabdeckungsaufnahme 40 eingepresst, eingeklebt, eingeschraubt oder anderweitig mit dieser verbunden werden. Beispielsweise kann über ein Einschrauben der Filterabdeckung 50 in die Filterabdeckungsaufnahme 45 der Abstand zwischen der Fluideingangsfläche 11 und der Fluidausgangsfläche 12 bedarfsgerecht eingestellt werden. Die Fluidausgangsfläche 12 wird über die Öffnung 51 der Filterabdeckung 50 ausgebildet, die den entsprechenden Abschnitt der Filterfläche zur Ableitung freigibt. In der gezeigten Ausführungsform ist die Öffnung exzentrisch zu der sich von der Fluideingangsfläche 11 zur gegenüberliegenden Seite des Filters erstreckenden Längsachse bzw. Mittelachse angeordnet. Die Öffnung 51 kann jedoch auch zentrisch angeordnet werden.

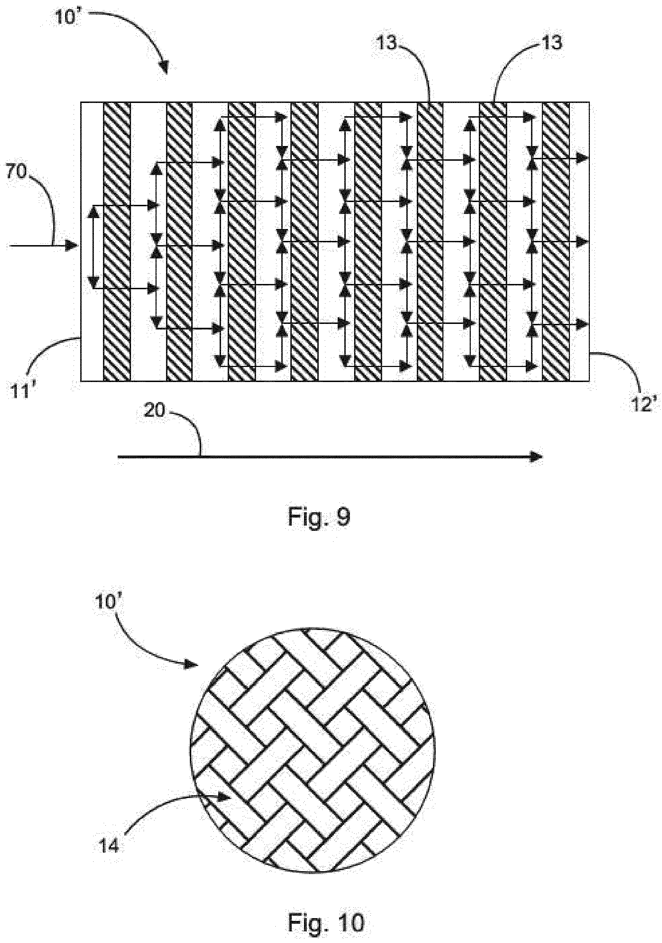

Figur 4a zeigt eine weitere exemplarische Ausführungsform eines erfindungsgemäßen Filtersystems 1'. Die perspektivische Querschnittsansicht des Filtersystems 1' entspricht dem in Figur 2 gezeigten Schnitt. Der in der Filteraufnahme 40' aufgenommene Filter 10' weist die in Figur 4b dargestellte Form auf. Demnach wird der Filter 10' aus einem runden Filterplättchen gebildet, dessen Filterflächen einen Durchmesser, also eine längere Filtererstreckung bzw. maximale Filterlänge I, ausweisen, der größer ist als die Erstreckung der Seitenfläche oder Umfangsfläche zwischen den Filterflächen, also als eine Filterdicke d. Durch die in Figur 4a dargestellte Ausrichtung des Filters 10' im Filtergehäuse 30' durch die Filteraufnahme 40' befindet sich die Fluideingangsfläche 11' (Figur 9) auf einem Abschnitt der Seitenfläche des Filters 10'. Der Filter 10' liegt senkrecht zur Seitenfläche auf der einen Seite an der Filteraufnahme 40' und auf der gegenüberliegenden Seite an der Gehäuseabdeckung 51' über seinen gesamten Durchmesser, also die Filterlänge I, an. Demnach wird die Fluidausgangsfläche 12' (Figur 9) über einen der Fluideingangsfläche 11' gegenüberliegenden Abschnitt der Seitenfläche des Filters 10' ausgebildet. Der sich an die Fluidausgangsfläche 12' anschließende Bereich wird von der Filteraufnahme 40' und die Filterabdeckung 50' begrenzt, wobei ein aus dem Filter 10' ausgeleitetes Fluid über die Öffnung 51' der Filterabdeckung 50' abgeführt werden kann. Durch Einrichten/Einlegen des Filters 10' und durch Anordnung des Fluideingangs 11' und der Fluidausgansöffnung 51 ist die Erstreckung des Filters 10' in der Hauptströmungsrichtung 20 des den Filter 10' durchlaufenden Fluids größer als quer dazu. Das heißt der Filter 10 ist derart angeordnet, dass der Strömungspfad maximal wird. Mit anderen Worten verläuft die Hauptströmungsrichtung 20 wiederum in einer Richtung und über eine Strecke I (dargestellt mit Doppelpfeil beim Bezugszeichen 20), die quer zur geringeren Filterausdehnung d liegt. Das heißt auch hier wird durch die Anordnung des Filters 10' bzw. der Fluidzuleitung zum Filter 10' der Strömungspfad 70 des zu filternden Fluids gegenüber dem Stand der Technik verlängert und somit der Filter 10' effektiver genutzt.

Figur 5 zeigt zur Anordnung des Filtergehäuses 30'gemäß Figur 4a nochmals einen exemplarischen Entnahmespike 200. Das Filtergehäuse 30' kann modular an dem Entnahmespike 200 bzw. einem Entlüftungsgehäuseabschnitt 240 des Entnahmespikes 200 angebracht oder integral mit diesem ausgebildet werden. Die im Zusammenhang mit dem erfindungsgemäßen Filtersystem beschriebenen Merkmale können vorteilhaft mit den Merkmalen des Entnahmespikes kombiniert werden, indem das Filtersystem an passender Stelle bzw. bei passendem Bauraum in den Entnahmespike integriert ist. Diese Beschreibung des Entnahmespikes gilt somit exemplarisch für einen Einbau des erfindungsgemäßen Filtersystems gegebenenfalls in ein anderes medizinisches Fluidtransfersystem.

Der Entnahmespike 200 gemäß Figur 5 umfasst einen Entnahmedorn 210, an den sich an seinem der Dornspitze abgewandten Ende ein Entlüftungsgehäuseabschnitt 240 anschließt. Der Entlüftungsgehäuseabschnitt 240 weist eine Belüftungsöffnung 241 auf, über die ein gasförmiges Fluid zur Entlüftung abgeführt und/oder zur Belüftung dem Entnahmespike 200 zugeführt werden kann. In diesem Sinne können die Begriffe Entlüftung bzw. Belüftung synonym verwendet werden. Je nach Anwendungsbedarf kann über ein Rückschlagventil oder vergleichbare unidirektionale Sperreinrichtungen aber auch lediglich eine Belüftung oder Entlüftung vorgesehen werden. Ist der Entnahmespike 200 über das Filtergehäuse 30' mit dem Filter 10' strömungsverbunden, so kann beispielsweise über den Filter 10' gefilterte Umgebungsluft über die Belüftungsöffnung 241 in den Entnahmespike 200 eingeleitet werden. Umgekehrt kann ein gasförmiges Fluid über die Belüftungsöffnung 241 dem Filter 10' zugeführt und über diesen gefiltert an die Umgebung abgegeben werden. Gemäß Figur 4a wird der Filter 10' dabei transversal zu seiner kürzeren Erstreckung durchströmt. Der Entnahmespike 200 weist zudem auf einer dem Entnahmedorn 210 abgewandten Seite eine Flüssigkeitsöffnung 242 auf, über die eine Flüssigkeit aus einem weiteren Behältnis in den Entnahmespike geleitet und/oder aus diesem in das weitere Behältnis eingeführt werden kann.

Anhand der in Figur 6 gezeigten Explosionsdarstellung des Entnahmespikes 200 wird der weitere Aufbau des Entnahmespikes 200 in einer exemplarischen Ausführungsform dargelegt. Das Gehäuse des Entnahmespikes 200 setzt sich dabei aus dem Einstechdorn 210 und dem Entlüftungsgehäuseabschnitt 240 zusammen. Der Einstechdorn 210 bzw. dessen der Dornspitze abgewandtes Ende weist eine Verbreiterung auf, die mit dem Entlüftungsgehäuseabschnitt 240 verbindbar ist und eine Luftfilterkammer 213 zur Aufnahme eines Luftfilters 220 sowie eine Flüssigkeitsfilterkammer 214 zur Aufnahme eines Flüssigkeitsfilters 230 aufweist.

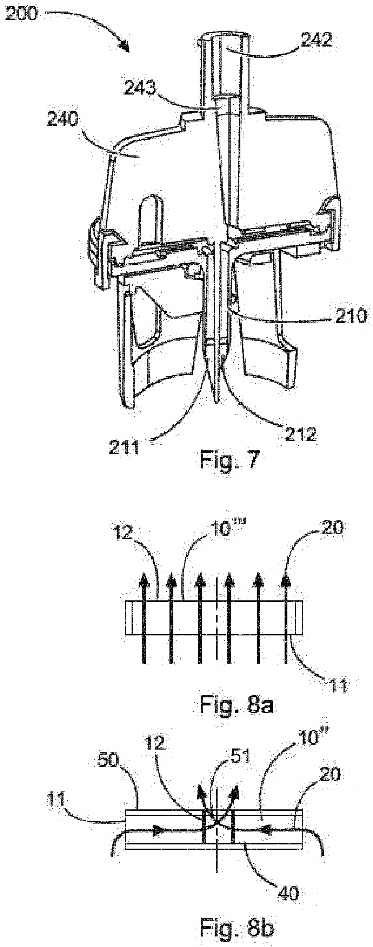

Zur Durchströmung des Entnahmespikes 200 mit einer Flüssigkeit und einem gasförmigen Fluid zeigt Figur 7 nochmals eine Querschnittsansicht. Der Einstechdorn 210 weist von der Dornspitze ausgehend einen Belüftungskanal 211 sowie einen Flüssigkeitskanal 212 auf. Über den Flüssigkeitskanal 212 kann eine Flüssigkeit aus einem dornspitzenseitigen Behältnis in die Flüssigkeitsfilterkammer 214 (Figur 6) und durch den Flüssigkeitsfilter 230 (Figur 6) strömen. Im Entlüftungsgehäuseabschnitt 240 kann die Flüssigkeit nach Durchlauf des Flüssigkeitsfilters 230 über einen Flüssigkeitsöffnungskanal 243 bzw. dann schließlich die Flüssigkeitsöffnung 242 in ein flüssigkeitsöffnungsseitiges Behältnis eingeleitet werden. In analoger Weise kann die Übertragung einer Flüssigkeit auch von einem flüssigkeitsöffnungsseitigen Behältnis in umgekehrter Richtung in ein dornspitzenseitiges Behältnis erfolgen.

Die vorstehende Flüssigkeitsübertragung in einem geschlossenen Fluidtransfersystem kann einen Druckausgleich erfordern, der in der gezeigten Ausführungsform über den Belüftungskanal 211 implementierbar ist. Der Druckausgleich wird hier exemplarisch anhand einer Entlüftung erläutert, ist aber bei einer Luftströmung in umgekehrter Richtung analog auf eine Belüftung übertragbar. Zur Entlüftung bzw. zum Druckabbau kann beispielsweise Luft aus einem dornspitzenseitigen Behältnis über den Belüftungskanal 211 in die Luftfilterkammer 213 (Figur 6) geleitet werden und den Luftfilter 220 (Figur 6) durchströmen. Die hierdurch gefilterte Luft oder anderweitige gasförmiges Substanz kann dann über die Belüftungsöffnung 241 aus dem Entlüftungsgehäuseabschnitt 240 ausgeleitet werden. Wie bereits in Bezug auf Figur 4a dargelegt, wird die aus der Belüftungsöffnung 241 ausgeleitete Luft oder anderweitige gasförmiges Substanz nicht direkt an die Umgebung abgegeben, sondern durchläuft den Filter 10' des Filtersystems 1' in der zur Figur 4a bereits beschriebenen Weise. Das zugrundeliegende Prinzip der Durchströmung zur Entlüftung ist dabei nicht auf den in Figur 4a gezeigten Filter 10' bzw. das Filtersystem 1' beschränkt, sondern auch auf weitere Ausführungsformen gleichermaßen anwendbar. Die zusätzliche Filterung über den Filter 10' des Filtersystems 1' kann beispielsweise aus Redundanzgründen oder zur Funktionsergänzung des Luftfilters 220, falls dieser keine ausreichende Filterung an sich oder für jeweilige zu filternde gasförmige Fluide aufweist, vorgesehen werden. Der Luftfilter 220 kann aber auch bei Verwendung des Filters 10' entfallen.

Zur Verdeutlichung der Unterscheidung des Prinzips des erfindungsgemäßen Filtersystems - unabhängig davon ob für sich genommen betrachtet oder in ein medizinisches Fluidtransfersystem oder speziell in einen Entnahmespike integriert - gegenüber dem Stand der Technik zeigen die Figuren 8a und 8b auch nochmals eine Gegenüberstellung. Hier sind die jeweiligen Hauptströmungsrichtungen durch einen einfachen Pfeil dargestellt. Zur Erläuterung wird bei den Filtern 10" und 10‴ davon ausgegangen, dass diese beispielsweise gleichermaßen als runde Filterplättchen ausgebildet sind. Die im Folgenden zur Gegenüberstellung genutzten Richtungsangaben beziehen sich auf eine jeweils durch die runden Filterflächen erstreckende Längsachse. Gemäß dem in Fig. 8a dargestellten Stand der Technik wird ein Filter 10‴ in axialer Richtung durchströmt. Die Fluideingangsfläche 11 und die Fluidausgangsfläche 12 werden dabei durch die runden Filterflächen gebildet. Die Hauptströmungsrichtung 20 ist somit axial. Die jeweiligen Strömungspfade durch den Filter 10‴sind somit minimal in ihrer Länge. Im Gegensatz dazu wird der Filter 10" nach Figur 8b radial durchströmt. Die runden Filterflächen des Filters 10" werden auf der einen Seite beispielsweise durch die Filteraufnahme 40 begrenzt und die gegenüberliegende Seite durch die Filterabdeckung 50. Das zu filternde Fluid kann in dieser Variante über die zwischen den runden Filterflächen befindliche Seitenfläche bzw. Umlauffläche zumindest abschnittsweise eingeleitet werden, d.h. die Fluideingangsfläche 11 entspricht zumindest abschnittsweise der Umlauffläche. In der gezeigten Ausführungsform weist der Filter 10" in der Mitte eine Durchgangsöffnung auf, deren Außenwandung um die Längsachse zumindest abschnittsweise die Fluidausgangsfläche 12 ausbildet. Durch die Öffnung 51 der Filterabdeckung 50 kann das aus der Fluidausgangsfläche 12 ausgetretene Fluid in die Umgebung entweichen. Die Hauptströmung 20 ist somit radial und somit gegenüber einer axialen Hauptströmung verlängert. In anderen Worten wird der Filter 10" bis zum Erreichen der Öffnung 51 in der Filterabdeckung 50 transversal zu seiner kürzesten Erstreckung durchströmt.

Der Strömungspfad eine zu filternden Fluids kann auch dadurch verlängert werden, dass diese in einem jeweiligen Filter wiederholt umgelenkt werden. Hierzu zeigt Figur 9 eine beispielhafte Filterausgestaltung anhand des Filters 10'. Der Filter 10' weist eine Hauptströmungsrichtung 20 gemäß der Fluideingangsfläche 11' und der Fluidausgangsfläche 12'. In der Hauptströmungsrichtung 20 sind nacheinander mehrere Filterschichten 13 angeordnet, die sich senkrecht zur Hauptströmungsrichtung 20 erstrecken. Ein Strömungspfad 70 eines in Hauptströmungsrichtung 20 in den Filter 10' eintretenden Fluids trifft auf die Filterschicht 13 und wird dabei zumindest anteilig umgelenkt. Wird die Filterschicht 13 beispielsweise aus einer in Figur 10 gezeigten Gewebestruktur 14 gebildet, so können laterale Strömungspfade, also Strömungspfadanteile senkrecht zur Hauptströmungsrichtung 20 umgelenkt werden, die erst mit Erreichen einer durch die Gewebestruktur 14 gebildeten Durchgangsöffnung wieder in Hauptströmungsrichtung 20 gerichtet werden. Dies wiederholt sich dann mit Erreichen jeder Filterschicht 13, sofern die Gewebestruktur 14 mit Gewebeanteilen im Strömungspfad liegt. Auch wenn einzelne Gewebefasern der Gewebestruktur 14 Fluidanteile aufnehmen können, so dient die vorstehende Erläuterung der prinzipielle Unterteilung eines Strömungspfads 70 in Anteile in Hauptströmungsrichtung 20 und lateral hierzu, um zumindest anteilig den Strömungspfad 70 insgesamt zu verlängern. Die Verlängerung des Strömungspfads 70 kann einerseits dazu genutzt werden, die möglichst vollständige Filterung zu filternder Substanzen zuverlässiger gewährleisten zu können. Darüber hinaus kann aber auch das Filtervolumen, wie dies der Figur 9 durch die Aufweitung des Strömungspfads 70 zu entnehmen ist, besser ausgenutzt werden.

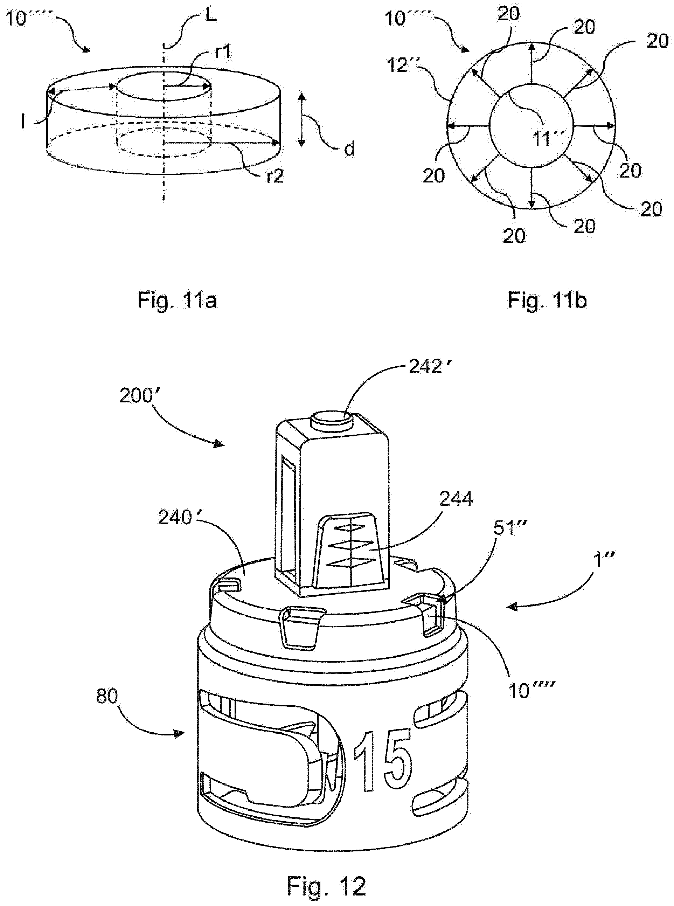

Fig. 11a zeigt eine perspektivische Ansicht einer weiteren exemplarischen Ausführungsform eines Filters 10ʺʺ als zylindrischer Hohlkörper. Eine Längsachse L des zylindrischen Hohlkörpers wird von der (Innen-) Wandung des zylindrischen Hohlkörpers umgeben. Mit anderen Worten verläuft die Wandung des zylindrischen Hohlkörpers parallel zur Längsachse L und umgibt diese radial. Der Filter 10ʺʺ wird durch einen zylindrischen Hohlkörper mit einer Filterdicke d, die sich in Richtung der Längsachse L erstreckt, gebildet. Ausgehend von einer Mittenachse, die hier der Längsachse L entspricht, weist die Innenwandung des zylindrischen Hohlkörpers einen Radius r1 und die Außenwandung einen Radius r2 auf. Die Filterlänge I beträgt somit in radialer Richtung r2 minus r1. Auch wenn der zylindrische Hohlkörper hier einen kreisförmigen Querschnitt senkrecht zur Längsachse L aufweist, kann der zylindrische Hohlkörper in alternativen Ausführungsformen in einem Querschnitt senkrecht zur Längsachse L auch ellipsenförmig ausgebildet sein. In anderen alternativen Ausführungsformen kann der Hohlkörper auch in einem Querschnitt senkrecht zur Längsachse L rechteckig oder als anderweitiges Polygon ausgebildet sein.

Fig. 11b zeigt eine schematische Darstellung des in Figur 11a dargestellten Filters 10ʺʺ in einer Draufsicht, also in Richtung der Längsachse L blickend. Der Filter 10ʺʺ ist dazu vorgesehen, in Bezug auf die Längsachse L in radialer Richtung durchströmt zu werden, wodurch sich durch die Pfeile dargestellten Hauptströmungsrichtungen 20 ergeben. Die Hauptströmungsrichtungen 20 können dabei sowohl senkrecht zur Längsachse L als auch diagonal in radialer Richtung verlaufen. Die Darstellung der Hauptströmungsrichtungen 20 bezieht sich hier auf einen unidirektionalen Verlauf. Der Filter 10ʺʺ filtert aber auch in umgekehrter Richtung, so dass grundsätzlich, wie auch auf die anderen Filter anwendbar, eine bidirektionale Filterung nutzbar ist. Letztlich ergibt sich hieraus dann eigentlich die Darstellung der jeweiligen Hauptströmungsrichtungen 20 als Doppelpfeil, wobei die Darstellung in Fig. 11b hinsichtlich der hier dargestellten Fluideingangsfläche 11" und Fluidausgangsfläche 12" bei einer radialen Strömung nach außen über die unidirektionalen Pfeile zur Vereinfachung lediglich den unidirektionalen Verlauf angibt..

In der hier dargestellten Ausführungsform ist die Filterlänge I und somit die Filterstrecke länger als die Filterdicke d. Die Innenwandung der Filters 10"" bildet dabei die Fluideingangsfläche 11" und die Außenwandung des Filters 10ʺʺ die Fluidausgangsfläche 12". In einer alternativen Ausführungsform kann die Fluidausgangsfläche bei diagonalem Verlauf der Hauptströmungsrichtungen 20 oder zumindest eines Teils davon auch durch zumindest eine der Stirnflächen, also der Flächen senkrecht zur Längsachse L, des Filters 10ʺʺ gebildet werden. Die Filterstrecke ist dabei insbesondere immer noch länger als die Filterdicke d. In einer weiteren alternativen Ausführungsform kann auch eine der Stirnseiten als Fluideingangsfläche für zumindest einen Teil der Hauptströmungsrichtungen 20 genutzt werden, wobei die Innenwandung und/oder die Außenwandung des Filters 10ʺʺ als Fluidausgangsfläche für eine solche Hauptströmungsrichtung 20 dient. Durch den entsprechend diagonalen Verlauf ist auch hier die Filterstrecke bevorzugt länger als die Filterdicke d.

Fig. 12 zeigt eine perspektivische Ansicht einer exemplarische Ausführungsform eines Entnahmespikes 200' zur Verwendung mit einem erfindungsgemäßen Filtersystem 1" mit einem Filter 10ʺʺ. Der Entnahmespike 200' umfasst das Filtersystem 1" mit dem Filter 10", einen Entlüftungsgehäuseabschnitt 240'mit Öffnungen 51", eine Flüssigkeitsöffnung 242', die hier als trocken abschließenden Verbindung ausgebildet ist, sowie einen Greifabschnitt 244, über den der Entnahmespike 200' auf einen Vialadapter 80 aufsetzbar bzw. zusammen mit diesem in ein Vial (nicht gezeigt) einsetzbar ist. In einer alternativen Ausführungsform, kann der Entnahmespike 200'auch direkt, also ohne den Vialadapter 80, auf einem Vial aufgesetzt werden.

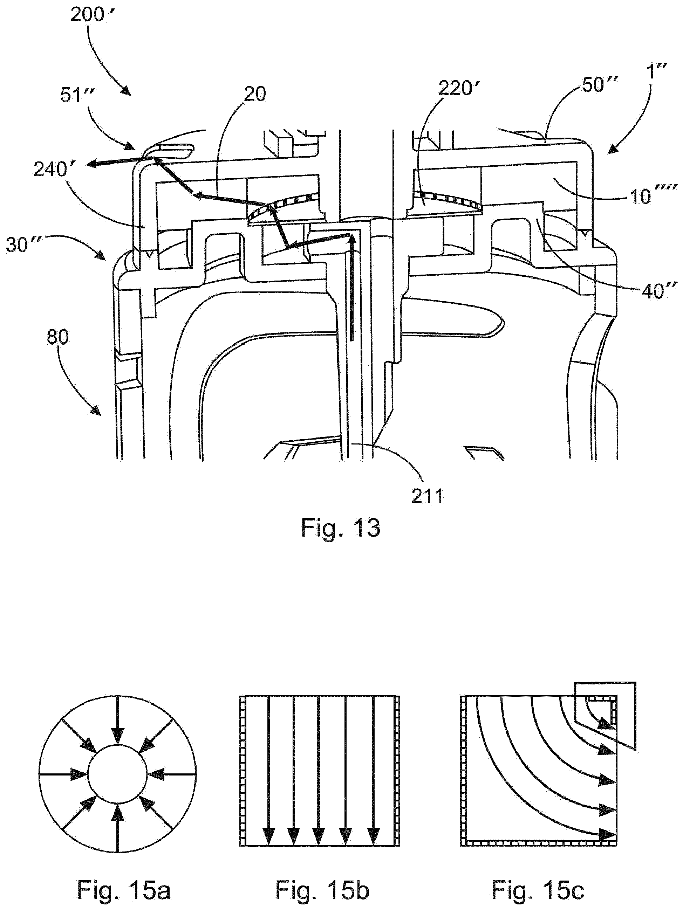

Fig. 13 zeigt hierzu eine perspektivische Schnittansicht des Entnahmespikes 200' gemäß Figur 12. Der Filter 10ʺʺ wird über eine Filterabdeckung 50" in Zusammenwirken mit einer Filteraufnahme 40" in einem Filtergehäuse 30" gehalten. Der Abstand der der Filteraufnahme 40" zur Filterabdeckung 50" in Richtung der Längsachse L des Filters 10"" als zylindrischer Hohlkörper ist dabei kleiner als die Filterdicke d in Richtung der Längsachse. Dadurch wird der Filter 10ʺʺ nicht nur positionsfest im Filtergehäuse 30" gehalten, sondern auch in Richtung der Längsachse L komprimiert. Durch die Komprimierung wird sichergestellt, dass der Filter 10ʺʺ in diesem Bereich an den in Richtung der Längsachse L gegenüberliegenden Flächen der Filteraufnahme 40" und der Filterabdeckung 50" anliegt. Die Filterabdeckung 50" weist zudem die Öffnungen 51" auf, die sich in der gezeigten Ausführungsform L-förmig über einen in radialer Richtung in Bezug auf die Längsachse L äußeren, der Filteraufnahme 40" abgewandten Kantenabschnitt des Filters 10ʺʺ erstrecken. Mit anderen Worten wird die Fluidausgangsfläche 12" der jeweiligen Öffnung 51" über einen Flächenabschnitt des Filters 10ʺʺ gebildet, der sowohl einen Teil der Außenwandung in einem der Filteraufnahme 40" abgewandten Abschnitt umfasst als auch einen Teil der der Filteraufnahme 40" abgewandten Stirnfläche, die sich an den äußeren Rand des Filter 10ʺʺ in radialer Richtung in Bezug auf die Längsachse L anschließt. Zudem ist zwischen dem Belüftungskanal 211 und der Fluideingangsfläche 11" des Filters 10ʺʺ ein hydrophober Luftfilter 220'angeordnet. In einer alternativen Ausführungsform kann zudem noch ein weiterer zusätzlicher hydrophober Luftfilter direkt am Ausgang des Belüftungskanals 211 angeordnet sein. Diese befindet sich demnach zwischen dem Belüftungskanal 211 und dem Luftfilter 220'. Der zusätzliche hydrophobe Luftfilter kann Komplikationen in Bezug auf ein Residualvolumen im Falle eines Fehlgebrauchs vermindern. Eine nach oben ausgerichtete Spitze des Einstechdorns mit entsprechend oberhalb des Einstechdorns angeordnetem Vial während einer Injektion einer Flüssigkeit in das Vial kann einen solchen Fehlgebrauch darstellen.

Im anwendungsgerechten Gebrauch wird ein gasförmiges Fluid gemäß der Ausführungsform der Figur 13 aus einem Vial durch den Belüftungskanal 211 geleitet. Das Fluid durchströmt zunächst den hydrophoben Luftfilter 220'. Die gasförmigen Bestandteile werden durch den hydrophoben Luftfilter 220' durchgelassen, während Flüssigbestandteile und in dem gasförmigen Fluid enthaltene Partikel, Mikroorganismen und Aerosole zurückgehalten werden. Im Anschluss durchläuft das gasförmige Fluid den Filter 10"", der als Aktivkohlefilter ausgebildet ist. Durch den Filter 10ʺʺ werden dann toxische Bestandteile des gasförmigen Fluids gefiltert, so dass diese nicht durch die Öffnungen 51 nach außen treten. Die sich radial um die Längsachse erstreckende Innenwandung des Filters 10ʺʺ dient dabei als Fluideingangsfläche 11". Das durch die Fluideingangsfläche 11" in den Filter 10ʺʺ eingetretene gasförmige Fluid such sich dabei den kürzesten Weg zur jeweiligen Fluidöffnung 51". Da die jeweilige Fluidöffnung 50" an einer der Filteraufnahme 40" in Richtung der Längsachse L gegenüberliegenden radial äußeren Seite angeordnet ist, verläuft der Hauptströmungspfad hier nicht senkrecht zur Längsachse L des Filters 10ʺʺ, sondern in Richtung der Öffnung 51 abgewinkelt, also diagonal. Für einen Druckausgleich von außen in den Entnahmespike 200' eindringende Luft durchläuft den Entnahmespike 200' dann in umgekehrter Richtung, also zunächst den Filter 10ʺʺ und dann den hydrophoben Luftfilter 220'.

Fig. 14a bis 14c zeigen perspektivische Ansichten einer weiteren exemplarischen Ausführungsform eines Filters 10^{v} als zylindrischer Hohlkörper. Während alle anderen Bezugszeichen und die entsprechenden Beschreibungen der Fig. 11a und 11b auch auf diese Ausführungsform anwendbar ist, hat im Unterschied zu der Ausführung nach Fig. 11 der Filter 10^{v} dieser Ausführungsform andere Maße. Hier ist die Dicke d des Filters (entsprechend Höhe des Hohlzylinders) größer als die Länge I (entsprechend Querschnittslänge des Hohlzylinders). Die Ausführungsform der Fig. 14a bis 14c ermöglichen eine sehr variable Gestaltung beim Einbau des Filters 10^{v} in das (nicht dargestellte) Filtergehäuse des Filtersystems, wobei trotz begrenztem Bauraum im Filtergehäuse eine möglichst hohe Filtereffizienz erreicht wird.

Die Hauptströmungsrichtung wird durch die entsprechende Einrichtung/Anordnung der mindestens einen Fluidöffnung zum Fluideintritt in den Hohlzylinder unter Bildung der Fluideingangsfläche(n) (E1 bis E8 in Fig. 14a; E in Fig. 14b und 14c) und der mindestens einen Fluidöffnung zum Fluidaustritt aus dem Hohlzylinder unter Bildung der Fluidausgangsfläche(n) (A1 bis A8 in Fig. 14a; A in Fig. 14b und 14c) definiert. Somit kann die Hauptströmungsrichtung entweder nur radial von der Innenwandung des Hohlzylinders (Fluideingangsfläche E) nach außen zur Außenwandung des Hohlzylinders (Fluidausgangsfläche A) verlaufen, wenn sich die Fluidöffnung mit der Fluideingangsfläche teilweise oder vollständig über die Innenwand und die Fluidöffnung mit der Fluidausgangsfläche teilweise oder vollständig über die Außenwand des Hohlzylinders erstreckt, wie in Fig. 14b bei vollständiger Erstreckung gezeigt. Alternativ kann Hauptströmungsrichtung nur axial entlang und parallel zur Längsachse (L) des Hohlzylinders verlaufen, wenn die Fluidöffnung mit der Fluideingangsfläche teilweise oder vollständig an der einen Stirnseite des Hohlzylinders und die Fluidöffnung mit der Fluidausgangsfläche teilweise oder vollständig an der anderen Stirnseite des Hohlzylinders eingerichtet sind, wie in Fig. 14c bei vollständiger Einrichtung an den Stirnseiten gezeigt. In einer weiteren Modifikation sind beide Möglichkeiten kombiniert, wie in Fig. 14a gezeigt, indem Fluidöffnungen mit jeweiligen Fluideingangsflächen E1 bis E8 jeweils teilweise an der einen Stirnseite mit teilweiser Erstreckung in die Außenwand hinein sowie Fluidöffnungen mit jeweiligen Fluidausgangsflächen A1 bis A8 jeweils teilweise an der anderen Stirnseite, ebenfalls mit teilweiser Erstreckung in die Außenwand hinein, durch einsprechenden Einbau in das Gehäuse eingerichtet sind, so dass die Hauptströmungsrichtung im Effekt sowohl radial als auch axial verläuft. Weiter Alternativen und Kombinationen sind möglich, z.B. dass die Fluideingangsflächen E1 bis E8 und Fluidausgangsflächen A1 bis A8 sich nicht wie in Fig. 14a dargestellt jeweils an der Außenwand erstrecken, sondern dass sich beide Gruppen E1 bis E8 und A1 bis A8 an der Innenwand, oder dass sich wechselnd eine Gruppe (z.B. E1 bis E8) an der Innenwand und die andere Gruppe (A1 bis A8) an der Außenwand erstrecken, oder dass sich beide Gruppen E1 bis E8 und A1 bis A8 sowohl an Innenwand als auch Außenwand des zylindrischen Hohlkörpers erstrecken. In einer weiteren Modifikation sind nicht acht, sondern eine andere Zahl an Fluideingangsflächen En und an Fluidausgangsflächen Am vorgesehen, wobei n und m unabhängig voneinander aus einer ganzen Zahl von zum Beispiel 1 bis 12 ausgewählt sein können. Auch können die Anordnungen der durch die jeweiligen Fluidöffnungen definierten Fluideingangsflächen E und Fluidausgangsflächen A vertauscht sein, d.h. die E bzw. E1, E2, E3 in den Fig. 14a-14c würden durch Umkehr der Strömungsrichtung zu A bzw. A1, A2, A3 und umgekehrt; z.B. wäre analog Fig. 14b die Hauptströmungsrichtung dann radial von außen nach innen. Auch können die Maße d, l, r1 und r2 des zylindrischen Hohlkörpers des Filters 10^{v} der Fig. 14a-14c variiert werden, ohne das Grundprinzip zu ändern.

Aufgrund der passenden Einrichtungen von Öffnungen zum Filtereintritt und zum Filteraustritt kann in diesen modifizierten Ausführungsformen die Hauptströmungsrichtung in diagonaler Richtung gelenkt werden, dass die Hauptströmungsrichtung wiederum die größere oder zumindest gleiche Erstreckung aufweist als zumindest in einer Richtung quer dazu auf.

Die in den Fig. 14a bis 14c gezeigten Ausführungsformen und die beschriebenen Modifikationen davon haben den Vorteil, dass zwei günstige Effekte erreicht und sogar kombiniert werden können: die radiale Hauptströmungsrichtung bzw. der radiale Strömungsbeitrag zur Gesamtströmung - insbesondere wenn sie die alleinige Strömungsrichtung gemäß Fig. 14b über die gesamte Länge L von der Innenwand zur Außenwand des zylindrischen Hohlkörpers darstellt- sorgt für stabile radiale Strömungseigenschaften, wie schematisch in Fig. 15a durch entsprechende Strömungspfeile dargestellt; die axiale Hauptströmungsrichtung bzw. der axiale Strömungsbeitrag zur Gesamtströmung entlang und parallel zur Längsachse (L) des Hohlzylinders - insbesondere wenn sie die alleinige Strömungsrichtung gemäß Fig. 14c über die gesamte Länge L von der einen Stirnseite zur anderen Stirnseite des zylindrischen Hohlkörpers darstellt - sorgt für einen längeren Hauptströmungsweg in einem vorgegebenen Bauraum, wie schematisch in Fig. 15b durch entsprechende Strömungspfeile dargestellt; und im Fall der Kombination gemäß Fig. 14a sind beide Effekte besonders gut kombinierbar. Diese variablen Arten der Fluiddurchströmung durch den Filter garantiert, dass das gesamte Volumen des Filters effektiv genutzt wird, um Fremdkomponenten zu filtrieren und zu entfernen. Die Wahl des Gleichgewichts aus Volumen einerseits, welches durch das Filtergehäuse des Filtersystems bzw. durch den in einem Fluidtransfersystem vorliegendem Bauraum vorgegeben ist, und andererseits Strömungslänge und Strömungsart stellt sicher, dass die Filtereffizienz signifikant verbessert ist.

In herkömmlichen Filtersystemen kommt es zu unregelmäßigen Fluidströmen durch den Filter, so dass Teile des Filters überhaupt nicht zum effektiven Filtrieren genutzt werden können: wie schematisch in Fig. 15c durch entsprechende Strömungspfeile dargestellt kommt es dann zu teilweise sehr kurzen Strömungswegen, und/oder Teile des Filtervolumens werden überhaupt nicht durchströmt, so dass die Filtereffizienz begrenzt ist. Das herkömmliche Problem des ungleichmäßigen Fluidstroms wird sogar noch dadurch verstärkt, dass Fremdkomponenten wie Fremdpartikel dazu tendieren, den kürzesten Weg zu nehmen, etwa in dem Bereich des Filters, der in Fig. 15c in Form eines kleinen Kästchens angezeigt ist. Dieses Problem kommt vor allem dann zum Tragen, wenn im Filtergehäuse nur begrenzter Bauraum zur Verfügung steht, wie dies in den hier beschriebenen Filtersystemen und Fluidtransfersystemen der Fall ist.

Das Filtersystem gemäß den Ausführungsformen der Fig. 14a bis 14c sowie deren möglicher Modifikationen ist mit dem Gehäuse in einem geschlossenen Fluidtransfersystem verbaut. Als Beispiele für mögliche geschlossene Fluidtransfersysteme und/oder weitere Elemente von geeigneten Filtersystemen wird auf die oben beschriebenen und den jeweils vorangehenden Figuren gezeigten Fluidtransfersysteme 100 und die weiteren Elemente der Filtersysteme 1, 1' und 1" Bezug genommen, insbesondere auf die Figuren 1 bis 13 und deren Beschreibungen.

Weitere Möglichkeiten bestehen darin, dass das erfindungsgemäße Filtersystem, insbesondere der in einem geschlossenen Fluidtransfersystem verbaute Filter, mit weiteren funktionellen Elementen kombiniert werden, beispielsweise mit Ventil(en), mit weiteren Fluid- und/oder Belüftungsgängen/-kanülen, mit Vial-Adaptern, und/oder mit weiteren Filterelementen.

### Bezugszeichenliste

- 1, 1', 1": Filtersystem
- 2: Filtersystemaufnahme
- 10, 10', 10", 10"", 10^{v}: Filter (erfindungsgemäß)
- 10‴: Filter (Stand der Technik)
- 11, 11', 11": Fluideingangsfläche
- 12, 12', 12": Fluidausgangsfläche
- 13: Filterschicht
- 14: Gewebestruktur
- 20: Hauptströmungsrichtung
- 30, 30', 30": Filtergehäuse
- 40, 40', 40": Filteraufnahme
- 45: Filterabdeckungsaufnahme
- 50, 50', 50": Filterabdeckung
- 51, 51', 51": Öffnung (Filterabdeckung)
- 60: Trägerelement
- 70: Strömungspfad
- 80: Vialadapter
- 100: geschlossenes Fluidtransfersystem (Ausschnitt)
- 200: Entnahmespike
- 210: Einstechdorn
- 211: Belüftungskanal
- 212: Flüssigkeitskanal
- 213: Luftfilterkammer
- 214: Flüssigkeitsfilterkammer
- 220, 220': Luftfilter
- 230: Flüssigkeitsfilter
- 240', 240': Entlüftungsgehäuseabschnitt (Entnahmespike)
- 241: Belüftungsöffnung
- 242, 242': Flüssigkeitsöffnung
- 243: Flüssigkeitsöffnungskanal
- 244: Greifabschnitt
- d: Filterdicke
- E, E1, , E8: Fluideingangsfläche
- A, A1, , A8: Fluidausgangsfläche
- I: Filterlänge
- L: Längsachse
- x: Länge (Trägerelement)

## Patentansprüche

1. Medizinisches Fluidtransfersystem zum Transfer medizinischer Flüssigkeiten aus einem medizinischen Behältnis in ein anderes medizinisches Behältnis, insbesondere für eine Closed System Transfer Device und/oder zum Zweck des Druckausgleichs zwischen medizinischen Einrichtungen, wobei das medizinische Fluidtransfersystem ein geschlossenes Fluidtransfersystem mit Druckausgleich ist und ein Filtersystem (1, 1', 1") aufweist, das Filtersystem aufweisend:
einen Filter (10 ^{v}) und ein Filtergehäuse, wobei der Filter (10 ^{v} ) in Form eines Zylinders im Filtergehäuse integriert ist und als Hohlzylinder ausgebildet ist,
mit mindestens einer Fluidöffnung zum Fluideintritt in den Hohlzylinder unter Bildung von Fluideingangsfläche(n) (E; E1 , E2, E3, ... ) und mindestens einer Fluidöffnung zum Fluidausgang aus dem Hohlzylinder unter Bildung von Fluidausgangsfläche(n) (A; A1 , A2, A3, ... ),
wobei eine Innenwandung des Hohlzylinders zumindest abschnittsweise die Fluideingangsfläche ausbildet und die Fluidausgangsfläche durch zumindest einen Abschnitt der Außenwandung des Hohlzylinders gebildet wird,
wobei durch Versatz der jeweiligen Fluideingangsfläche und Fluidausgangsfläche in Richtung der Längsachse (L) des Hohlzylinders die Hauptströmungsrichtung zumindest abschnittsweise axiale Anteile in radialer Richtung aufweist.

2. Medizinisches Fluidtransfersystem nach Anspruch 1, wobei der Filter (10, 10', 10", 10ʺʺ, 10 ^{v} ) hydrophob, insbesondere ein Aktivkohlefilter ist.

3. Medizinisches Fluidtransfersystem nach Anspruch 1 oder 2, wobei der Filter (10, 10', 10", 10ʺʺ, 10 ^{v} ) in einem nach außen abgedichteten Gehäuse eingerichtet ist, wobei in einem Rauchtest beim Einleiten von rauchbildendem TiCl₄ kein Rauch nach außen freigesetzt wird.

4. Medizinisches Fluidtransfersystem nach einem der vorherigen Ansprüche, wobei über den Filter (10, 10', 10", 10ʺʺ, 10 ^{v}) bis zumindest 200 ml an rauchbildendem TiCl₄ absorbierbar ist.

5. Medizinisches Fluidtransfersystem nach einem der vorangegangenen Ansprüche für das geschlossene Fluidtransfersystem (100) mit Druckausgleich, wobei der Filter (10, 10', 10", 10ʺʺ, 10 ^{v}) in der Hauptströmungsrichtung eine größere oder zumindest gleiche Erstreckung (I) aufweist als zumindest in einer Richtung quer dazu.

6. Medizinisches Fluidtransfersystem nach Anspruch 5, wobei der Filter (10, 10', 10", 10ʺʺ, 10 ^{v}) über eine Filterabdeckung (50, 50', 50") in einer Filteraufnahme (40, 40', 40") des Filtergehäuses (30, 30', 30") gehalten wird, insbesondere
wobei die Filterabdeckung (50, 50', 50") eine Öffnung (51, 51', 51") aufweist, durch die ein den Filter (10, 10', 10", 10ʺʺ) durchlaufendes Fluid an eine auf der dem Filter (10, 10', 10", 10ʺʺ, 10 ^{v}) abgewandte Seite der Filterabdeckung (50, 50', 50") befindliche Umgebung abgegeben werden kann, und/oder
wobei die Filterabdeckung (50, 50") zumindest abschnittsweise an einer zur Hauptströmungsrichtung (20) des den Filter (10) durchlaufenden Fluids im Wesentlichen senkrechten Fläche des Filters (10, 10"") anliegt, oder
wobei die Filterabdeckung (50', 50") zumindest abschnittsweise an einer zur Hauptströmungsrichtung (20) des den Filter (10', 10"") durchlaufenden Fluids im Wesentlichen parallelen Fläche des Filters (10', 10"") anliegt.

7. Medizinisches Fluidtransfersystem nach einem der vorherigen Ansprüche, wobei der Filter (10, 10', 10") zumindest abschnittsweise in einer zur Hauptströmungsrichtung (20) des den Filter (10, 10', 10") durchlaufenden Fluids im Wesentlichen parallelen Richtung von einem elastisch verformbaren Trägerelement (60), insbesondere aus Silikon oder aus einem thermoplastischen Elastomer, umgeben ist, insbesondere.
wobei sich das Trägerelement (60) von einem der Filterabdeckung (50, 50') abgewandten Ende des Filters (10, 10') über eine Länge (x) von 1 mm bis 15 mm, insbesondere 2 mm bis 8 mm, erstreckt.

8. Medizinisches Fluidtransfersystem nach einem der vorherigen Ansprüche, wobei der Filter (10, 10', 10ʺʺ, 10 ^{v}) in der Hauptströmungsrichtung (20) des den Filter (10, 10', 10"") durchlaufenden Fluids eine Erstreckung von zumindest 2 mm, insbesondere mindestens 6 mm, bis höchstens 15 mm, insbesondere höchstens 10 mm, aufweist, und/oder.
wobei der Filter (10, 10', 10", 10ʺʺ, 10 ^{v}) ein Volumen von zumindest 60 mm ³, bevorzugt mindestens 70 mm³, insbesondere mindestens 80 mm³, und höchstens 400 mm³,
bevorzugt höchstens 260 mm³, insbesondere höchstens 200 mm ³, aufweist, und/oder wobei das Filtersystem (1, 1', 1") unlösbar mit dem geschlossenen Fluidtransfersystem (100) verbindbar ist.

9. Medizinisches Fluidtransfersystem nach einem der vorherigen Ansprüche, wobei der Filter (10, 10', 10", 10"", 10 ^{v}) von der Filteraufnahme (40, 40', 40") nach Anspruch 6, der Filterabdeckung (50', 50") nach Anspruch 6 und/oder dem Trägerelement (60) nach Anspruch 7 in einer radialen Richtung in Bezug auf die Hauptströmungsrichtung (20) des den Filter (10, 10', 10", 10ʺʺ, 10 ^{v}) durchlaufenden Fluids rotationssymmetrisch umgeben ist, und/oder
der Filter (10, 10', 10ʺʺ, 10 ^{v}) derart ausgebildet ist, dass ein jeweiliger Strömungspfad (70) eines den Filter (10, 10', 10"") durchlaufenden Fluids länger als die Erstreckung des Filters (10, 10', 10"", 10 ^{v}) in der Hauptströmungsrichtung (20) des den Filter (10, 10', 10ʺʺ, 10 ^{v}) durchlaufenden Fluids ist, insbesondere
wobei der Filter (10, 10', 10ʺʺ, 10 ^{v}) zumindest zwei sich im Wesentlichen senkrecht zur Hauptströmungsrichtung (20) erstreckende Filterschichten (13) aufweist.

10. Medizinisches Fluidtransfersystem nach Anspruch 9, wobei der Filter (10, 10', 10ʺʺ, 10 ^{v}) oder zumindest eine der Filterschichten (13), insbesondere alle Filterschichten (13), Umlenkmittel, insbesondere eine sich im Wesentlichen senkrecht zur Hauptströmungsrichtung (20) erstreckende Gewebestruktur (14) und/oder Granulate, aufweist.

11. Medizinisches Fluidtransfersystem nach Anspruch 10, wobei zumindest zwei aufeinanderfolgende Filterschichten (13) eine Gewebestruktur (14) aufweisen, die jeweils zueinander versetzt sind.

## Claims

1. Medical fluid transfer system for transferring medical fluids from a medical container to another medical container, in particular for a closed system transfer device and/or for pressure compensation between medical apparatuses, the medical fluid transfer system being a closed fluid transfer system with pressure compensation and having a filter system (1, 1', 1"), the filter system having:
a filter (10^{v}) and a filter housing, the filter (10^{v}) being integrated in the form of a cylinder into the filter housing and being formed as a hollow cylinder,
comprising at least one fluid opening for fluid entry into the hollow cylinder so as to form fluid entry area(s) (E; E1, E2, E3, ...) and at least one fluid opening for fluid exit from the hollow cylinder so as to form fluid exit area(s) (A; A1, A2, A3, ...),
wherein an inner wall of the hollow cylinder forms the fluid entry area at least in portions and the fluid outlet area is formed by at least a portion of the outer wall of the hollow cylinder,
wherein, as a result of the associated fluid entry area and fluid exit area being offset in the direction of the longitudinal axis (L) of the hollow cylinder, the main flow direction has axial components in the radial direction, at least in portions.

2. Medical fluid transfer system according to claim 1, wherein the filter (10, 10', 10", 10ʺʺ, 10^{v}) is hydrophobic, in particular being an activated carbon filter.

3. Medical fluid transfer system according to either claim 1 or claim 2, wherein the filter (10, 10', 10", 10ʺʺ, 10^{v}) is arranged in an externally sealed housing, no smoke being released to the outside in a smoke test when smoke-forming TiCl₄ is introduced.

4. Medical fluid transfer system according to any of the preceding claims, wherein up to at least 200 ml of smoke-forming TiCl₄ can be absorbed via the filter (10, 10', 10", 10ʺʺ, 10^{v}).

5. Medical fluid transfer system according to any of the preceding claims for the closed fluid transfer system (100) with pressure compensation, wherein the filter (10, 10', 10", 10ʺʺ, 10^{v}) has an extent (I) in the main flow direction greater than or at least equal to that at least in a direction transverse thereto.

6. Medical fluid transfer system according to claim 5, wherein the filter (10, 10', 10", 10ʺʺ, 10^{v}) is held in a filter receptacle (40, 40', 40") of the filter housing (30, 30', 30") via a filter cover (50, 50', 50"), in particular
wherein the filter cover (50, 50', 50") has an opening (51, 51', 51") through which a fluid passing through the filter (10, 10', 10", 10ʺʺ) can be discharged to an environment located on the side of the filter cover (50, 50', 50") facing away from the filter (10, 10', 10", 10ʺʺ, 10^{v}), and/or
wherein the filter cover (50, 50") is positioned at least in portions against a face of the filter (10, 10") which is substantially perpendicular to the main flow direction (20) of the fluid passing through the filter (10), or
wherein the filter cover (50', 50") is positioned at least in portions against a face of the filter (10', 10") which is substantially parallel to the main flow direction (20) of the fluid passing through the filter (10', 10").

7. Medical fluid transfer system according to any of the preceding claims, wherein the filter (10, 10', 10") is surrounded at least in portions, in a direction substantially parallel to the main flow direction (20) of the fluid passing through the filter (10, 10', 10"), by an elastically deformable support element (60), in particular made of silicone or of a thermoplastic elastomer, in particular
wherein the support element (60) extends over a length (x) of 1 mm to 15 mm, in particular 2 mm to 8 mm, from an end of the filter (10, 10') facing away from the filter cover (50, 50').

8. Medical fluid transfer system according to any of the preceding claims, wherein the filter (10, 10', 10ʺʺ, 10^{v}) has an extent of at least 2 mm, in particular at least 6 mm, to at most 15 mm, in particular at most 10 mm, in the main flow direction (20) of the fluid passing through the filter (10, 10', 10ʺʺ), and/or
wherein the filter (10, 10', 10", 10ʺʺ, 10^{v}) has a volume of at least 60 mm³, preferably at least 70 mm³, in particular at least 80 mm³, and at most 400 mm³, preferably at most 260 mm³, in particular at most 200 mm³, and/or
wherein the filter system (1, 1', 1") can be unreleasably connected to the closed fluid transfer system (100).

9. Medical fluid transfer system according to any of the preceding claims, wherein the filter (10, 10', 10", 10ʺʺ, 10^{v}) is surrounded rotationally symmetrically, in a radial direction about the main flow direction (20) of the fluid passing through the filter (10, 10', 10", 10ʺʺ, 10^{v}), by the filter receptacle (40, 40', 40") according to claim 6, the filter cover (50', 50") according to claim 6 and/or the support element (60) according to claim 7, and/or
the filter (10, 10', 10ʺʺ, 10^{v}) is formed in such a way that an associated flow path (70) of a fluid passing through the filter (10, 10', 10ʺʺ) is longer than the extent of the filter (10, 10', 10ʺʺ, 10^{v}) in the main flow direction (20) of the fluid passing through the filter (10, 10', 10ʺʺ, 10^{v}), in particular
wherein the filter (10, 10', 10ʺʺ, 10^{v}) has at least two filter layers (13) extending substantially perpendicular to the main flow direction (20).

10. Medical fluid transfer system according to claim 9, wherein the filter (10, 10', 10ʺʺ, 10^{v}) or at least one of the filter layers (13), in particular all filter layers (13), comprises deflecting means, in particular a fabric structure (14), extending substantially perpendicular to the main flow direction (20), and/or granules.

11. Medical fluid transfer system according to claim 10, wherein at least two successive filter layers (13) have a fabric structure (14), said structures being mutually offset in each case.

## Revendications

1. Système médical de transfert de fluides destiné à transférer des liquides médicaux d'un contenant médical à un autre contenant médical, notamment pour un dispositif de transfert en système clos et/ou aux fins de l'équilibrage de pression entre des équipements médicaux, le système médical de transfert de fluides étant un système clos de transfert de fluides avec équilibrage de pression et présentant un système de filtration (1, 1', 1"), le système de filtration présentant :
un filtre (10^{v}) et un boîtier de filtre, le filtre (10^{v}) étant intégré dans le boîtier de filtre sous la forme d'un cylindre et étant conçu sous forme de cylindre creux,
avec au moins une ouverture de fluide destinée à l'entrée du fluide dans le cylindre creux, formant une ou plusieurs surfaces d'entrée du fluide (E ; E1, E2, E3, ...), et au moins une ouverture de fluide destinée à la sortie du fluide hors du cylindre creux, formant une ou plusieurs surfaces de sortie du fluide (A ; A1, A2, A3, ...),
une paroi intérieure du cylindre creux formant, au moins par sections, la surface d'entrée du fluide, et la surface de sortie du fluide étant formée par au moins une section de la paroi extérieure du cylindre creux,
le décalage de la surface d'entrée du fluide et de la surface de sortie du fluide respectives dans la direction de l'axe longitudinal (L) du cylindre creux ayant pour effet que la direction principale d'écoulement présente, au moins par sections, des composantes axiales en direction radiale.

2. Système médical de transfert de fluides selon la revendication 1, le filtre (10, 10', 10", 10ʺʺ, 10^{v}) étant hydrophobe, notamment étant un filtre à charbon actif.

3. Système médical de transfert de fluides selon la revendication 1 ou 2, le filtre (10, 10', 10", 10ʺʺ, 10^{v}) étant disposé dans un boîtier étanche vis-à-vis de l'extérieur, aucune fumée n'étant libérée vers l'extérieur dans un essai à la fumée lors de l'introduction de TiCl₄ formant de la fumée.

4. Système médical de transfert de fluides selon l'une des revendications précédentes, jusqu'à au moins 200 ml de TiCl₄ formant de la fumée peuvent être absorbés par l'intermédiaire du filtre (10, 10', 10", 10ʺʺ, 10^{v}).

5. Système médical de transfert de fluides selon l'une des revendications précédentes, destiné au système clos de transfert de fluides (100) avec équilibrage de pression, le filtre (10, 10', 10", 10ʺʺ, 10^{v}) présentant, dans la direction principale d'écoulement, une étendue (I) supérieure ou au moins égale à celle au moins dans une direction transversale à celle-ci.

6. Système médical de transfert de fluides selon la revendication 5, le filtre (10, 10', 10", 10ʺʺ, 10^{v}) étant maintenu, par l'intermédiaire d'un couvercle de filtre (50, 50', 50"), dans un logement de filtre (40, 40', 40") du boîtier de filtre (30, 30', 30"), notamment
le couvercle de filtre (50, 50', 50") présentant une ouverture (51, 51', 51") par laquelle un fluide traversant le filtre (10, 10', 10", 10ʺʺ) peut être déchargé dans un environnement situé du côté du couvercle de filtre (50, 50', 50") opposé au filtre (10, 10', 10", 10ʺʺ, 10^{v}), et/ou
le couvercle de filtre (50, 50") reposant, au moins par sections, contre une surface du filtre (10, 10ʺʺ) essentiellement perpendiculaire à la direction principale d'écoulement (20) du fluide traversant le filtre (10), ou
le couvercle de filtre (50', 50") reposant, au moins par sections, contre une surface du filtre (10', 10ʺʺ) essentiellement parallèle à la direction principale d'écoulement (20) du fluide traversant le filtre (10', 10ʺʺ).

7. Système médical de transfert de fluides selon l'une des revendications précédentes, le filtre (10, 10', 10") étant entouré, au moins par sections, dans une direction essentiellement parallèle à la direction principale d'écoulement (20) du fluide traversant le filtre (10, 10', 10"), par un élément de support (60) élastiquement déformable, notamment en silicone ou en un élastomère thermoplastique, notamment
l'élément de support (60) s'étendant, depuis une extrémité du filtre (10, 10') opposée au couvercle de filtre (50, 50'), sur une longueur (x) de 1 mm à 15 mm, notamment de 2 mm à 8 mm.

8. Système médical de transfert de fluides selon l'une des revendications précédentes, le filtre (10, 10', 10ʺʺ, 10^{v}) présentant, dans la direction principale d'écoulement (20) du fluide traversant le filtre (10, 10', 10ʺʺ), une étendue d'au moins 2 mm, notamment d'au moins 6 mm, jusqu'à au plus 15 mm, notamment au plus 10 mm, et/ou
le filtre (10, 10', 10", 10ʺʺ, 10^{v}) présentant un volume d'au moins 60 mm³, de préférence d'au moins 70 mm³, notamment d'au moins 80 mm³, et d'au plus 400 mm³, de préférence d'au plus 260 mm³, notamment d'au plus 200 mm³, et/ou
le système de filtration (1, 1', 1") pouvant être relié de manière indétachable au système clos de transfert de fluides (100).

9. Système médical de transfert de fluides selon l'une des revendications précédentes, le filtre (10, 10', 10", 10ʺʺ, 10^{v}) étant entouré de manière à symétrie de révolution par le logement de filtre (40, 40', 40") selon la revendication 6, le couvercle de filtre (50', 50") selon la revendication 6 et/ou l'élément de support (60) selon la revendication 7, dans une direction radiale par rapport à la direction principale d'écoulement (20) du fluide traversant le filtre (10, 10', 10", 10ʺʺ, 10^{v}), et/ou
le filtre (10, 10', 10ʺʺ, 10^{v}) étant conçu de telle sorte qu'un trajet d'écoulement respectif (70) d'un fluide traversant le filtre (10, 10', 10ʺʺ) soit plus long que l'étendue du filtre (10, 10', 10ʺʺ, 10^{v}) dans la direction principale d'écoulement (20) du fluide traversant le filtre (10, 10', 10ʺʺ, 10^{v}), notamment
le filtre (10, 10', 10ʺʺ, 10^{v}) présentant au moins deux couches filtrantes (13) s'étendant essentiellement perpendiculairement à la direction principale d'écoulement (20).

10. Système médical de transfert de fluides selon la revendication 9, le filtre (10, 10', 10ʺʺ, 10^{v}) ou au moins l'une des couches filtrantes (13), notamment toutes les couches filtrantes (13), présentant des moyens de déviation, notamment une structure tissée (14) s'étendant essentiellement perpendiculairement à la direction principale d'écoulement (20) et/ou des granulés.

11. Système médical de transfert de fluides selon la revendication 10, au moins deux couches filtrantes (13) successives présentant chacune une structure tissée (14), qui sont décalées l'une par rapport à l'autre.
